(19) Europäisches Patentamt
European Patent Office
Office européen des brevets

(11) EP 0 705 886 B1

(12) EUROPÄISCHE PATENTSCHRIFT

(45) Veröffentlichungstag und Bekanntmachung des Hinweises auf die Patenterteilung:
**20.06.2001 Patentblatt 2001/25**

(51) Int Cl.[7]: **C09B 35/22**, C09B 41/00, C09B 67/10, G03G 9/09, C08K 5/23

(21) Anmeldenummer: **95114950.9**

(22) Anmeldetag: **22.09.1995**

(54) **Pigmente für elektrophotographische Toner und Entwickler**

Pigments for electrophotographic toners and developers

Pigments pour toners et développateurs électrophotographiques

(84) Benannte Vertragsstaaten:
**BE CH DE ES FR GB IT LI NL**

(30) Priorität: **05.10.1994 DE 4435543**

(43) Veröffentlichungstag der Anmeldung:
**10.04.1996 Patentblatt 1996/15**

(73) Patentinhaber: **Clariant GmbH
65929 Frankfurt am Main (DE)**

(72) Erfinder:
- **Metz, Hans Joachim, Dr.
D-64285 Darmstadt (DE)**
- **Macholdt, Hans-Tobias, Dr.
D-64297 Darmstadt (DE)**
- **Baur, Rüdiger, Dr.
D-65817 Eppstein (DE)**

(56) Entgegenhaltungen:
**EP-A- 0 024 702**
**EP-A- 0 244 687**
**FR-A- 2 214 730**
**FR-A- 2 416 924**

- **DATABASE WPI Section Ch, Week 9443 Derwent Publications Ltd., London, GB; Class A89, AN 94-344341 XP002001626 & JP-A-06 266 163 (FUJI XEROX CO LTD) , 22.September 1994**
- **PATENT ABSTRACTS OF JAPAN vol. 011, no. 097 (P-560), 26.März 1987 & JP-A-61 248059 (CANON INC), 5.November 1986,**
- **CHEMICAL ABSTRACTS, vol. 104, no. 14, 7.April 1986 Columbus, Ohio, US; abstract no. 111362e, Seite 83; XP002001625 & CS-A-222 019 (RUZICKA K. ET AL)**
- **Transaltion into English of JP 6-266163 quoted as a Derwent abstract in the Search Report.**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 705 886 B1

Printed by Jouve, 75001 PARIS (FR)

## Beschreibung

Die vorliegende Erfindung betrifft ein verbessertes Pigment auf Basis von C.I. Pigment Yellow 180 als Farbmittel in elektrophotographischen Tonern und Entwicklern.

Bei elektrophotographischen Aufzeichnungsverfahren wird auf einem Photoleiter ein "latentes Ladungsbild" erzeugt. Dieses "latente Ladungsbild" wird durch Aufbringen eines elektrostatisch geladenen Toners entwickelt, der dann beispielsweise auf Papier, Textilien, Folien oder Kunststoff übertragen und beispielsweise mittels Druck, Strahlung, Hitze oder Lösungsmitteleinwirkung fixiert wird. Typische Toner sind Ein- oder Zweikomponentenpulvertoner (auch Ein- oder Zweikomponenten-Entwickler genannt), darüberhinaus sind noch Spezialtoner, wie z.B. Magnet- oder Flüssigtoner und Polymerisationstoner, im Einsatz (L.B. Schein, "Electrophotography and Development Physics"; Springer Series in Electrophysics 14; Springer-Verlag, 2nd edition, 1992).

Ein Maß für die Tonerqualität ist seine spezifische Aufladung q/m (Ladung pro Masseeinheit). Neben Vorzeichen und Höhe der elektrostatischen Aufladung ist vor allem das schnelle Erreichen der gewünschten Ladungshöhe und die Konstanz dieser Ladung über einen längeren Aktivierzeitraum hinweg ein entscheidendes Qualitätskriterium. Darüberhinaus ist die Unempfindlichkeit des Toners gegen Klimaeinflüsse, wie Temperatur und Luftfeuchtigkeit, ein weiteres wichtiges Eignungskriterium.

Sowohl positiv als auch negativ aufladbare Toner finden Verwendung in Fotokopierern, Laserdruckern, LED-(Light emitting diode), LCS-(Liquid crystal shutter)-Druckern oder anderen digitalen Druckern auf elektrophotographischer Basis, in Abhängigkeit vom Verfahrens- und Gerätetyp.

Um elektrophotographische Toner oder Entwickler mit entweder positiver oder negativer Aufladung zu erhalten, werden häufig Ladungssteuermittel zugesetzt. Als farbgebende Komponente werden in Bunttonern typischerweise organische Farbpigmente eingesetzt. Farbpigmente haben gegenüber Farbstoffen wegen ihrer Unlöslichkeit im Anwendungsmedium erhebliche Vorteile, wie z.B. bessere Thermostabilität und Lichtechtheit.

Aufbauend auf dem Prinzip der "subtraktiven Farbmischung" kann mit Hilfe der drei Primärfarben Gelb, Cyan und Magenta das gesamte für das menschliche Auge sichtbare Farbspektrum wiedergegeben werden. Nur wenn die jeweilige Primärfarbe den genau definierten farblichen Anforderungen genügt, ist eine exakte Farbwiedergabe möglich. Andernfalls können einige Farbtöne nicht wiedergegeben werden und der Farbkontrast ist nicht ausreichend.

Bei Vollfarbtonern müssen die drei Toner Gelb, Cyan und Magenta neben den genau definierten farblichen Anforderungen auch hinsichtlich ihrer triboelektrischen Eigenschaften exakt aufeinander abgestimmt sein, da sie nacheinander im gleichen Gerät übertragen werden.

Von Farbmitteln ist bekannt, daß sie die triboelektrische Aufladung von Tonern teilweise nachhaltig beeinflussen können (H.-T. Macholdt, A. Sieber, Dyes & Pigments 9 (1988), 119-127). Wegen der unterschiedlichen triboelektrischen Effekte von Farbmitteln und des daraus resultierenden teilweise sehr ausgeprägten Einflusses auf die Toneraufladbarkeit ist es nicht möglich, die Farbmittel in eine einmal erstellte Tonerbasisrezeptur einfach hinzuzufügen. Vielmehr kann es notwendig werden, für jedes Farbmittel eine eigene Rezeptur zu erstellen, für welche Art und Menge des benötigten Ladungssteuermittels speziell zugeschnitten werden. Dieses Vorgehen ist entsprechend aufwendig und kommt dann bei Farbtonern für Prozeßfarbe noch zusätzlich zu den bereits vorher beschriebenen Schwierigkeiten dazu.

Darüberhinaus ist für die Praxis wichtig, daß die Farbmittel eine hohe Thermostabilität und eine gute Dispergierbarkeit besitzen. Typische Einarbeitungstemperaturen für Farbmittel in die Tonerharze liegen bei Verwendung von Knetern oder Extrudern zwischen 100°C und 200°C. Dementsprechend ist eine Thermostabilität von 200°C, besser 250°C, von großem Vorteil. Wichtig ist auch, daß die Thermostabilität über einen längeren Zeitraum (ca. 30 Minuten) und in verschiedenen Bindemittelsystemen gewährleistet ist. Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, die noch weitere Inhaltsstoffe, wie Ladungssteuermittel, Wachse oder Fließhilfsmittel, enthalten können oder im Nachhinein zugesetzt bekommen können.

Gelbpigmente für elektrophotographische Toner und Entwickler sind in zahlreicher Form im Einsatz. Generell werden Pigmente auf Azobasis bevorzugt, vor allem wegen ihres Farbtons, ihrer Farbstärke und ihres Dispergierverhaltens. Typischerweise eingesetzte Azogelbpigmente sind C.I. Pigment Yellow 12, C.I.Pigment Yellow 13, C.I. Pigment Yellow 17, C.I. Pigment Yellow 174 und C.I. Pigment Yellow 176.

Nachteile dieser Pigmente sind ihre teilweise mangelnde Thermostabilität (vor allem der Diarylidpigmente), sowie aus ökologischen Gründen das Vorhandensein organisch gebundenen Chlors oder von Schwermetallen im Molekül.

Eines der wenigen Azopigmente, das auch den ökologischen Anforderungen entspricht, ist C.I. Pigment Yellow 180. Kommerziell verfügbares Pigment Yellow 180 hat jedoch selbst in seiner transparentesten Form den Nachteil einer für den Einsatz in Vollfarbtonern ungenügenden Transparenz, was seinen Einsatz auf diesem Gebiet von vorneherein unmöglich macht. Desweiteren hat dieses Pigment einen triboelektrischen Effekt, der die Toneraufladbarkeit zur negativen Polarität hin beeinflußt. Die Verwendung von C.I. Pigment Yellow 180 als Farbmittel in Gelbtonern ist in

der JP-A-06 266 163 beschrieben.

Die Transparenz ist von zentraler Bedeutung, weil beim Vollfarbkopieren oder Drucken die Farben Gelb, Cyan und Magenta übereinander kopiert oder gedruckt werden, wobei die Reihenfolge der Farben vom Gerät abhängt. Ist nun eine oben liegende Farbe nicht transparent genug, so kann die darunter liegende nicht ausreichend durchscheinen und die Farbwiedergabe ist verzerrt. Beim Kopieren oder Drucken auf Overhead-Folien ist die Transparenz noch bedeutsamer, da hier mangelnde Transparenz auch nur einer Farbe die gesamte Bildprojektion grau erscheinen läßt.

Grundsätzlich besteht ein Bedarf an Pigmenten mit möglichst unterdrücktem triboelektrischen Eigeneffekt, da sich diese Pigmente dann problemlos sowohl für positiv wie auch für negativ aufladbare Toner einsetzen lassen.

Der vorliegenden Erfindung lag die Aufgabe zugrunde, ein farbstarkes und transparentes Gelbpigment zur Verfügung zu stellen, das einen weniger negativen triboelektrischen Eigeneffekt besitzt und außerdem den vorstehend genannten Anforderungen in ökologischer Hinsicht genügt.

Die Aufgabe wurde überraschenderweise durch nachstehendes Azopigment, das durch eine besonders große Oberfläche gekennzeichnet ist, gelöst. Gegenstand der vorliegenden Erfindung ist ein Azopigment der Formel (1)

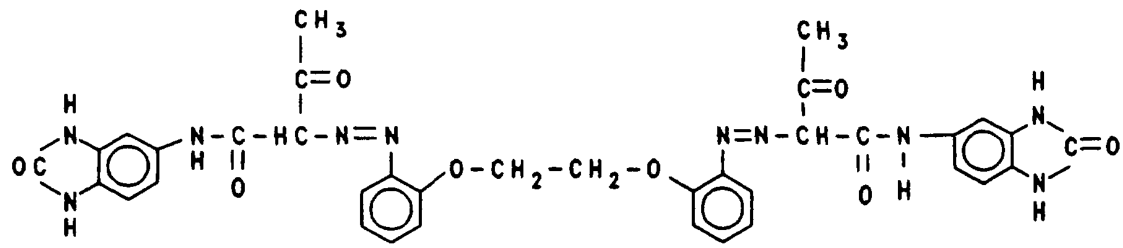

(1)

gekennzeichnet durch eine spezifische Oberfläche des Pigmentpulvers von mehr als 45 $m^2/g$, vorzugsweise mehr als 55 $m^2/g$, insbesondere mehr als 60 $m^2/g$.

Das Pigment der Formel (1) ist an sich bereits bekannt (EP-A-0 024 702) und unter der Bezeichnung ® Novoperm-Gelb P-HG im Handel. Dieses bekannte Pigment besitzt jedoch selbst in seiner bislang transparentesten Form eine spezifische Oberfläche von höchstens 44 $m^2/g$, einhergehend mit einer mittleren Teilchengröße $d_{50}$ von mindestens 140 nm. Ein Pigment der Formel (1) mit einer spezifischen Oberfläche von mehr als 45 $m^2/g$, einhergehend mit einer mittleren Teilchengröße $d_{50}$ von 120 nm und kleiner, ist bislang noch nicht beschrieben.

Außer einer verbesserten, größeren spezifischen Oberfläche und damit einhergehend einer verbesserten, kleineren mittleren Teilchengröße zeichnet sich das erfindungsgemäße Pigment auch durch eine andere Teilchenform aus. Während die bislang transparenteste Form stäbchenförmige Teilchen besitzt, kristallisiert das erfindungsgemäße Pigment in einer würfelartigen Form. Dies läßt sich auch durch das Länge-Breite-Verhältnis der Pigmentteilchen veranschaulichen. Das bisher bekannte Pigment besitzt für die Teilchen ein Länge-Breite-Verhältnis von größer als 2:1, das erfindungsgemäße Pigment ein Länge-Breite-Verhältnis von kleiner als 1,6:1.

Das Verfahren zur Herstellung eines Azopigments der Formel (1) mit den besagten Kennzeichen ist dadurch gekennzeichnet, daß die Synthese bei ungewöhnlich tiefen Temperaturen und durch schnelle Zugabe der Diazokomponente zur vorgelegten Kupplungskomponente - sogar ein Eingießen innerhalb weniger Sekunden ist möglich - und gegebenenfalls in Gegenwart eines ionischen oder nichtionischen Tensids durchgeführt wird. Dieses Verfahren weicht von der herrschenden Lehrmeinung wesentlich ab, nach der Azopigmente mit geringen Konzentrationsgradienten, d. h. langsame Zugabe der Diazokomponente zur vorgelegten Kupplungskomponente, in der Kuppelsuspension hergestellt werden. Durch Überwindung dieses Vorurteils gelingt es, das Pigment in einer bislang unbekannten extrem feinteiligen, jedoch stark aggregierten und agglomerierten Form (Präpigment) frei von unerwünschten Zersetzungsprodukten zu synthetisieren. Die an sich unerwünschte Aggregationsneigung kann durch eine Nachbehandlung mit einem organischen Lösemittel beseitigt werden. Hierbei werden die Kristallstörungen eliminiert und die spezifische Oberflächenenergie erniedrigt. Dieser Vorgang wird charakterisiert durch einen steilen Anstieg der BET-Oberfläche des Pigments um einen Faktor 10 bis 100 während der Nachbehandlung.

Gegenstand der vorliegenden Erfindung ist auch ein Verfahren zur Herstellung eines Azopigments der Formel (1) mit den genannten besonderen Merkmalen durch Azokupplung von 1,2-Bis(2-aminophenoxy)-ethan-Bisdiazoniumsalz (Diazokomponente) mit 5-Acetoacetylaminobenzimidazol-2-on (Kupplungskomponente), dadurch gekennzeichnet, daß man die Azokupplung bei einer Temperatur zwischen 5 und 35°C, vorzugsweise 10 und 30°C, und durch Zugabe der Diazokomponente zur vorgelegten Kupplungskomponente innerhalb von höchstens 30 Minuten, vorzugsweise höchstens 15 Minuten, durchführt, gegebenenfalls vor, während oder nach der Azokupplung ein ionisches oder nichtionisches Tensid zugibt und anschließend das entstandene agglomerierte Präpigment einem Lösemittelfinish unterwirft, besonders bevorzugt sind organische oder organisch/wäßrige Medien.

Als besonders geeignete Tenside im Sinne der vorliegenden Erfindung haben sich nichtionogene Oxalkylate von Alkoholen, Fettalkoholen, Phenolen, Alkylphenolen, Naphtholen, Alkylnaphtholen und Fettaminen mit Ethylenoxid und/oder Propylenoxid sowie Blockpolymere von Ethylenoxid und Propylenoxid erwiesen; weiterhin sind geeignet Verbindungen mit einer Poly(ethylenoxy)-Kette oder einer Poly(ethylenoxy)-poly-(methylethylenoxy)-Kette, die über ein Sauerstoff- oder ein Stickstoffatom mit Resten der folgenden Art verbunden sind: primäre oder sekundäre Alkylreste mit 6 bis 26 C-Atomen, insbesondere bevorzugt Alkylreste mit 10 bis 18 C-Atomen Kettenlänge, speziell dem Nonyl-, Decyl-, Undecyl-, Dodecyl-, Tridecyl-, Tetradecyl-, Pentadecyl-, Hexadecyl-, Heptadecyl-, Octadecyl-, 2-Butyloctyl-, 2-Phenyloctyl-, 2-Hexyldecyl-, 2-Heptylundecyl-, 2-Octyldodecyl-, 2-Nonyltridecyl-, 2-Decyltetradecyl-, 10-Undecenyl-, Oleyl-, 9-Octadecenyl-, Linoleyl- oder Linolenylrest; cycloaliphatische Reste mit 6 bis 30 C-Atomen; aromatische Reste, wie der gegebenenfalls substituierte Phenyl- oder der Alkylphenylrest mit bis zu drei primären oder sekundären Alkylresten, vorzugsweise dem Hexylphenyl-, Heptylphenyl-, Octylphenyl-, Nonylphenyl-, Undecylphenyl-, Dodecylphenyl-, Isononylphenyl-, Tributylphenyl- oder Dinonylphenylrest, wobei der Phenylrest mit weiteren aromatischen Resten substituiert sein kann, wie der Benzyl-p-phenyl-phenylrest; Naphthyl- oder Alkylnaphthylreste, vorzugsweise der $\alpha$-Naphthyl- oder $\beta$-Naphthylrest oder der Alkyl-$\beta$-naphthylrest mit 1 bis 3 unverzweigten oder verzweigten Alkylgruppen, beispielsweise Methyl, Butyl, Octyl, Nonyl, Decyl, Dodecyl oder Tetradecyl; gegebenenfalls alkylsubstituierte heterocyclische Reste oder mit heterocyclischen Resten substituierte Alkylreste, wie beispielsweise der 2-[2-(8-Heptadecen-1-yl)-4,5-dihydro-1-imidazolyl]-ethyl-Rest.

Es können auch Gemische der obengenannten Verbindungen und insbesondere Gemische, wie sie bei der Oxalkylierung mit Ethylenoxid und/oder Propylenoxid von synthetischen Fettalkoholen aus der Oxosynthese oder von Fettalkoholen aus natürlichen Rohstoffen (nach Fettspaltung und Reduktion) anfallen, eingesetzt werden. Als natürliche Rohstoffe seien Kokosöl, Palmöl, Baumwollsaatöl, Sonnenblumenöl, Sojabohnenöl, Leinöl, Rüböl, Talg und Fischöl genannt. Ebenso geeignet sind entsprechende Fettamin-Oxalkylate aus diesen natürlichen Rohstoffen, insbesondere Kokosfettamin, Talgamin, Oleylamin oder Dialkylfettaminoxide wie z.B. Dimethylcocosalkylaminoxid. Außerdem sind auch oxalkylierte, höhermolekulare oberflächenaktive Hilfsmittel (Tenside) zu erwähnen, wie sie beispielsweise in den folgenden Patent-, Offen- und Auslegeschriften beschrieben werden: DE-A1-27 30 223, DE-B2-21 56 603, DE-A1-30 26 127, DE-B2-24 21 606 und EP-A1-00 17 189.

Darüberhinaus ist auch der Einsatz von modernen nichtionischen Tensiden auf Basis von nachwachsenden Rohstoffen wie z.B. Zuckeralkylate möglich, wobei all die genannten nichtionischen Tenside auch im Gemisch mit anionischen oder kationischen Tensiden eingesetzt werden können. Als anionische Tenside sind besonders solche von Interesse, die als polare, hydrophile Gruppierung Sulfonsäure-, Schwefelsäurehalbester-, Phosphorsäurepartialester- oder Carboxylatfunktionen enthalten. Die kationischen Tenside enthalten im allgemeinen eine quartäre Aminfunktion und entsprechende Gegenionen wie Halogenid oder Anionen, die sich von Sauerstoffsäuren der Hauptgruppenelemente ableiten.

Der Lösemittelfinish wird bei üblichen Bedingungen durchgeführt, beispielsweise wie in EP-A-0 024 702 beschrieben. Am zweckmäßigsten ist es, als organisches Medium Isobutanol oder ein Isobutanol-Wasser-Gemisch zu verwenden und für 0,1 bis 10 Stunden, bevorzugt 0,5 bis 2 Stunden, ganz besonders bevorzugt 60 bis 70 Minuten, auf 50 bis 150°C, bevorzugt 90 bis 110°C, zu erhitzen.

Durch das erfindungsgemäße Herstellungsverfahren wird das besagte Azopigment in einer solchen Form erhalten, die seine Verwendung als Farbmittel in elektrophotographischen Tonern und Entwicklern ermöglicht, d.h. es besitzt eine deutlich verbesserte Transparenz im Vergleich zu bislang bekanntem C.I. Pigment Yellow 180 und einen weniger negativen triboelektrischen Eigeneffekt.

Außer in elektrophotographischen Tonern und Entwicklern kann ein triboelektrisch veränderter Eigeneffekt eines Pigmentes auch zur Verbesserung der elektrostatischen Aufladung von Pulvern und Lacken führen, insbesondere in triboelektrisch oder elektrokinetisch versprühten Pulverlacken, wie sie zur Oberflächenbeschichtung von Gegenständen aus beispielsweise Metall, Holz, Kunststoff, Glas, Keramik, Beton, Textilmaterial, Papier oder Kautschuk zur Anwendung kommen, eingesetzt werden. Die Pulverlacktechnologie kommt beispielsweise beim Lackieren von Kleingegenständen, wie Gartenmöbeln, Campingartikeln, Haushaltsgeräten, Fahrzeugteilen, Kühlschränken und Regalen, sowie beim Lackieren von kompliziert geformten Werkstücken zur Anwendung. Der Pulverlack oder das Pulver erhält seine elektrostatische Aufladung im allgemeinen nach einem der beiden folgenden Verfahren:

a) Beim Corona-Verfahren wird der Pulverlack oder das Pulver an einer geladenen Corona vorbeigeführt und hierbei aufgeladen,

b) beim triboelektrischen oder elektrokinetischen Verfahren wird vom Prinzip der Reibungselektrizität Gebrauch gemacht.

Der Pulverlack oder das Pulver erhalten im Sprühgerät eine elektrostatische Aufladung, die der Ladung des Reibungspartners, im allgemeinen ein Schlauch oder Sprührohr, beispielsweise aus Polytetrafluorethylen, entgegengesetzt ist. Auch eine Kombination von beiden Verfahren ist möglich.

Als Pulverlackharze werden typischerweise Epoxidharze, carboxyl- und hydroxylgruppenhaltige Polyesterharze, Polyurethan- und Acrylharze zusammen mit den üblichen Härtern eingesetzt. Auch Kombinationen von Harzen finden Verwendung. So werden beispielseise häufig Epoxidharze in Kombination mit carboxyl- und hydroxylgruppenhaltigen Polyesterharzen eingesetzt. Typische Härterkomponenten für Epoxidharze sind beispielsweise Säureanhydride, Imidazole sowie Dicyandiamid und deren Abkömmlinge. Für hydroxylgruppenhaltige Polyesterharze sind typische Härterkomponenten beispielsweise Säureanhydride, verkappte Isocyanate, Bisacylurethane, Phenolharze und Melaminharze. Für carboxylgruppenhaltige Polyesterharze sind typische Härterkomponenten beispielsweise Triglycidylisocyanurate oder Epoxidharze. In Acrylharzen kommen als typische Härterkomponenten beispielsweise Oxazoline, Isocyanate, Triglycidylisocyanurate oder Dicarbonsäuren zur Anwendung.

Der Nachteil einer ungenügenden Aufladung ist vor allem bei triboelektrisch oder elektrokinetisch versprühten Pulvern und Pulverlacken, die auf Basis von Polyesterharzen, insbesondere carboxylgruppenhaltigen Polyestern, oder auf der Basis von sogenannten Mischpulvern, auch Hybridpulver genannt, hergestellt worden sind, zu beobachten. Unter Mischpulvern versteht man Pulverlacke, deren Harzbasis aus einer Kombination von Epoxidharz und carboxylgruppenhaltigem Polyesterharz besteht. Die Mischpulver bilden die Basis für die in der Praxis am häufigsten vertretenen Pulverlacke. Ungenügende Aufladung der oben genannten Pulver und Pulverlacke führt dazu, daß Abscheidequote und Umgriff am zu beschichtenden Werkstück ungenügend sind, wobei bekannt ist, daß unter Umständen auch der triboelektrische Eigeneffekt eines Pigmentes für den Verlust der Aufladbarkeit eines an sich geeigneten Harzsystems verantwortlich sein kann (H-T. Macholdt, "Ladungssteuermittel als Konzept für die triboelektrische Aufladung"; EPS-Schriftenreihe "Praxis Forum, Fachbroschüre Oberflächentechnik 27/91" Seite 102-111; Technik + Kommunikations Verlags GmbH, Berlin (1991)). Der Ausdruck "Umgriff" ist ein Maß dafür, inwieweit sich ein Pulver oder Pulverlack am zu beschichtenden Werkstück auch an Rückseiten, Hohlräumen, Spalten und vor allem an Innenkanten und -ecken abscheidet.

Darüberhinaus kann ein veränderter triboelektrischer Eigeneffekt eines Pigmentes zur Verbesserung der Elektreteigenschaften bei eingefärbten (pigmentierten) Elektretmaterialien führen, wobei typische Elektretmaterialien auf Polyolefinen, halogenierten Polyolefinen, Polyacrylaten, Polyacrylnitrilen, Polystyrolen oder Fluorpolymeren, wie beispielsweise Polyethylen, Polypropylen, Polytetrafluorethylen und perfluoriertes Ethylen und Propylen, oder auf Polyestern, Polycarbonaten, Polyamiden, Polyimiden, Polyetherketonen, auf Polyarylensulfiden, insbesondere Polyphenylensulfiden, auf Polyacetalen, Celluloseestern, Polyalkylenterephthalaten sowie Mischungen daraus basieren. Elektretmaterialien haben zahlreiche Einsatzgebiete und können ihre Ladung durch Corona- oder Triboaufladung erhalten (Lit: G.M. Sessler, "Electrets", Topics in Applied Physics, Vol 33, Springer Verlag, New York, Heidelberg, 2nd Ed., 1987).

Des weiteren kann ein veränderter triboelektrischer Eigeneffekt eines Pigmentes zu verbessertem Trennverhalten von eingefärbten (pigmentierten) Polymeren führen, die nach elektrostatischen Trennverfahren getrennt werden (s. Y. Higashiyau, J. of Electrostatics, 30, Seiten 203-212, 1993 sowie die darin zitierte Literatur, und J.A. Cross "Electrostatics-Principles, Problems and Applications", Adam Hilger, Bristol, 1987, insbesondere Kapitel 5.3 "Electrostatic Separation" sowie die darin zitierte Literatur). Dementsprechend ist der triboelektrische Eigeneffekt von Pigmenten auch für die Kunststoffmassenfärbung von Bedeutung. Ebenso ist der triboelektrische Eigeneffekt bei Verfahrens-/Verarbeitungsschritten, bei denen es zu intensivem Reibungskontakt kommt, von Bedeutung, wie z.B. Spinnprozessen, Folienziehprozessen oder weiteren Formgebungsverfahren.

Darüberhinaus sind die erfindungsgemäßen Azopigmente auch geeignet als Farbmittel in Druckfarben, Lakken, Anstrichfarben, Kunststoffen, Gummimaterialien, Büroartikeln, Holzanstrich- und Reinigungsmitteln, Künstlerfarben sowie in Ink-Jet-Tinten auf wäßriger und nicht-wäßriger Basis sowie in solchen Tinten, die nach dem Hot-melt-Verfahren arbeiten. Typische Druckfarben sind z.B. Offsetdruckfarben, Illustrationstiefdruckfarben sowie Druckfarben für den wäßrigen und lösemittelhaltigen Verpackungsdruck und den Flexodruck. Typische Lacke sind Autoserien- und Reparaturlacke, Industrielacke sowie Bautenanstrichfarben (z.B. Kunststoffputze oder Dispersionsanstrichfarben). Typische Kunststoffeinfärbungen sind z.B. solche in Hart- und Weich-PVC (Polyvinylchlorid), Polyolefinen oder Polystyrolen.

Der besondere Vorteil des erfindungsgemäßen Azopigments auf Basis P.Y. 180, insbesondere in Tonerbindemitteln wird erkennbar im Vergleich zum bisherigen Standard von P.Y. 180 (Novoperm Gelb P-HG). So zeigt im Vergleich zu Novoperm Gelb P-HG z.B. das erfindungsgemäß synthetisierte Pigment (Beispiel 1) eine um einen dL Wert von -1,98 verbesserte Transparenz (um 3 Bewertungseinheiten transparenter), was eine ganz erhebliche Verbesserung für die Praxis bedeutet. Insbesonders ist hervorzuheben, daß die erfindungsgemäßen Pigmente im Vergleich zum bekannten Standard nicht nur eine kleinere Teilchengröße aufweisen, sondern daß auch die Teilchenform sich von ausgeprägt nadelförmig in Richtung würfelförmig verbessert. Diese Verbesserung bewirkt eine deutlich leichtere Dispergierbarkeit und Suspendierbarkeit in polymeren Materialien und (organischen) Lösemitteln.

Die erzielte Transparenzverbesserung ist für die Praxis von großem Vorteil und auch für das menschliche Auge sofort erkennbar. Darüberhinaus ist überraschend, daß trotz der starken Transparenzverbesserung durch die sehr viel höhere spezifische Oberfläche die anderen vorteilhaften coloristischen Pigmenteigenschaften wie Farbton,

Thermostabilität und Lichtechtheit nicht verlorengehen. Dies wird z.B. daran erkennbar, daß im Röntgenbeugungsdiagramm sowohl die Kristallmodifikation als auch Lage und Halbwertsbreite der Reflexionsbanden unverändert bleiben.

Weiterhin ist die Verbesserung des triboelektrischen Eigeneffekts des erfindungsgemäßen Pigments gegenüber dem bisherigen Stand der Technik (Novoperm Gelb P-HG) deutlich erkennbar. Während Novoperm Gelb P-HG einen ausgeprägten negativen triboelektrischen Aufladungseffekt zeigt (Tabelle 1, Vergleich) ist dieser negative Aufladungseffekt bei dem erfindungsgemäßen Pigment stark reduziert (Tab. 1). So lädt ein Testtoner mit 5 % des erfindungsgemäßen Pigmentes (Pigment 1.1) lediglich bis zu einem Spitzenwert von -8 µC/g auf, während ein vergleichbarer Testtoner mit einem Pigment gemäß dem Stand der Technik (Vergleichsbeispiel) bis zu einem Spitzenwert von -20 µC/g auflädt.

Tabelle 1: Vergleich des zeitabhängigen triboelektrischen Verhaltens verschiedener Pigmente (5 Gew.-%) in Tonerbindemitteln (95 Gew.-%)

| | | | | | |
|---|---|---|---|---|---|
| (A) Styrolacrylat-Tonerharz | | | | | |
| mit eindispergiertem Pigment [5 Gew.-%] | | 10 min | 30 min | 120 min | 24 Std. |
| Vergleich | µC/g | - 17 | - 23 | - 24 | - 24 |
| Pigment 2.1 | µC/g | - 4 | - 8 | - 11 | - 11 |
| (B) Polyester-Tonerharz | | | | | |
| mit eindispergiertem Pigment [5 Gew.-%] | | 10 min | 30 min | 120 min | 24 Std. |
| Vergleich | µC/g | - 10 | - 12 | - 20 | - 19 |
| Pigment 3.1 | µC/g | + 3 | + 2 | - 2 | - 5 |
| Pigment 4.1 | µC/g | + 1 | 0 | - 4 | - 6 |
| Pigment 1.1 | µC/g | 0 | 0 | - 7 | - 8 |

Dieser reduzierte negative triboelektrische Eigeneffekt führt auch zu dem Vorteil, daß die erfindungsgemäßen Gelbpigmente mit zahlreichen Ladungssteuermitteln, d.h. sowohl positiv als auch negativ steuernden, kombiniert werden können und gute anwendungstechnische Aufladbarkeiten zeigen.

Als Ladungssteuermittel, die mit dem erfindungsgemäßen Gelbpigment kombiniert werden können, kommen in Betracht:
Triphenylmethane; Ammonium- und Immoniumverbindungen (Iminiumverbindungen); fluorierte Ammonium- und Immoniumverbindungen; biskationische Säureamide; polymere Ammoniumverbindungen; Diallylammoniumverbindungen; Arylsulfid-Derivate; Phenolderivate; Phosphoniumverbindungen und fluorierte Phosphoniumverbindungen; Calix(n)arene; ringförmig verknüpfte Oligosaccharide (Cyclodextrine); Polyestersalze; Metallkomplexverbindungen; Benzimidazolone; Azine, Thiazine oder Oxazine, die im Colour Index als Pigments, Solvent Dyes, Basic Dyes oder Acid Dyes aufgeführt sind.

Besonders bevorzugt sind die nachfolgend genannten Ladungssteuermittel, die einzeln oder in Kombination miteinander mit dem erfindungsgemäßen Gelbpigment kombiniert werden.
Triarylmethan-Derivate wie beispielsweise:
Colour Index Pigment Blue 1, 1:2, 2, 3, 8, 9, 9:1, 10, 10:1, 11, 12, 14, 18, 19, 24, 53, 56, 57, 58, 59, 61, 62, 67 oder beispielsweise Colour Index Solvent Blue 2, 3, 4, 5, 6, 23, 43, 54, 66, 71, 72, 81, 124, 125, sowie die im Colour Index unter Acid Blue und Basic Dye aufgeführten Triarylmethan-Verbindungen, sofern sie hinsichtlich ihrer Temperaturstabilität und Verarbeitbarkeit geeignet sind, wie beispielsweise Colour Index Basic Blue 1, 2, 5, 7, 8, 11, 15, 18, 20, 23, 26, 36, 55, 56, 77, 81, 83, 88, 89, Colour Index Basic Green 1, 3, 4, 9, 10, wobei sich wiederum Colour Index Solvent Blue 125, 66 und 124 ganz besonders eignen.
Besonders gut geeignet ist Colour Index Solvent Blue 124 in Form seines hochkristallinen Sulfats oder des Trichlortriphenylmethyltetrachloraluminats.

Beispiele für für die Herstellung von Elektretfasern gut geeigneter Ladungssteuermittel der Triphenylmethan-Reihe sind die in der DE-A-1 919 724 und der DE-A-1 644 619 beschriebenen Verbindungen.

Weiterhin geeignet sind Triphenylmethane wie beschrieben in US-A-5 051 585, insbesondere solche der Formel (2)

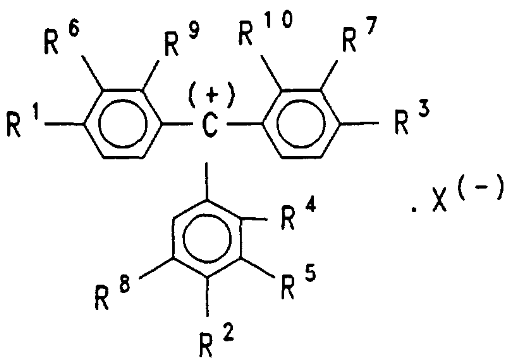

(2)

worin

$R^1$ und $R^3$ gleich oder verschieden sind und $-NH_2$, eine Mono- und Dialkylaminogruppe, deren Alkylgruppen 1 bis 4, vorzugsweise 1 oder 2, C-Atome haben, eine Mono- oder Di-omega-hydroxyalkylaminogruppe, deren Alkylgruppen 2 bis 4, vorzugsweise 2, C-Atome haben, eine gegebenenfalls N-Alkylsubstituierte Phenyl- oder Phenalkylaminogruppe, deren Alkyl 1 bis 4, vorzugsweise 1 oder 2, C-Atome hat, deren Phenalkylgruppe in der aliphatischen Brücke 1 bis 4, vorzugsweise 1 oder 2, C-Atome, hat und deren Phenylkern einen oder zwei der folgenden Substituenten: Alkyl mit 1 oder 2 C-Atomen, Alkoxy mit 1 oder 2 C-Atomen und die Sulfonsäuregruppe tragen kann, bedeuten,
$R^2$ Wasserstoff ist oder eine der für $R^1$ und $R^3$ genannten Bedeutungen hat,
$R^4$ und $R^5$ Wasserstoff, Halogen, vorzugsweise Chlor, oder eine Sulfonsäuregruppe bedeutet oder $R^4$ mit $R^5$ zusammen einen ankondensierten Phenylring bildet,
$R^6$, $R^7$, $R^9$ und $R^{10}$ jeweils Wasserstoff oder einen Alkylrest mit 1 oder 2 C-Atomen, vorzugsweise Methyl, bedeuten und
$R^8$ Wasserstoff oder Halogen, vorzugsweise Chlor, ist und
$X^-$ für ein stöchiometrisches Äquivalent eines Anions steht, insbesondere für ein Chlorid-, Sulfat-, Molybdat-, Phosphormolybdat- oder Borat-Anion.

Besonders bevorzugt ist ein Ladungssteuermittel der Formel (2), worin $R^1$ und $R^3$ Phenylaminogruppen, $R^2$ eine m-Methylphenylaminogruppe und die Reste $R^4$ bis $R^{10}$ alle Wasserstoff sind.

Weiterhin geeignet sind Ammonium- und Immoniumverbindungen, wie beschrieben in US-A-5 015 676.

Weiterhin geeignet sind fluorierte Ammonium- und Immoniumverbindungen, wie beschrieben in US-A-5 069 994, insbesondere solche der Formel (3)

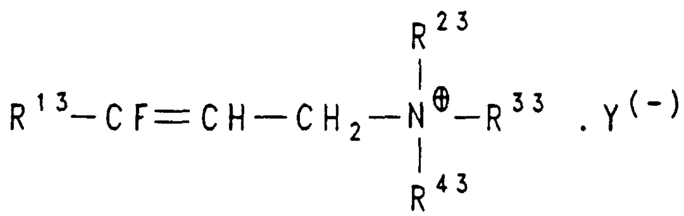

(3)

worin

$R^{13}$ perfluoriertes Alkyl mit 5 bis 11 C-Atomen,
$R^{23}$, $R^{33}$ und $R^{43}$ gleich oder verschieden sind und Alkyl mit 1 bis 5, vorzugsweise 1 bis 2, C-Atomen bedeuten und
$Y^-$ ein stöchiometrisches Äquivalent eines Anions, vorzugsweise eines Tetrafluoroborat- oder Tetraphenylborat-Anions ist. Vorzugsweise bedeutet
$R^{13}$ perfluoriertes Alkyl mit 5 bis 11 C-Atomen,
$R^{23}$ und $R^{33}$ Ethyl und
$R^{43}$ Methyl.

Weiterhin geeignet sind biskationische Säureamide, wie beschrieben in WO 91/10172, insbesondere solche der Formel (4)

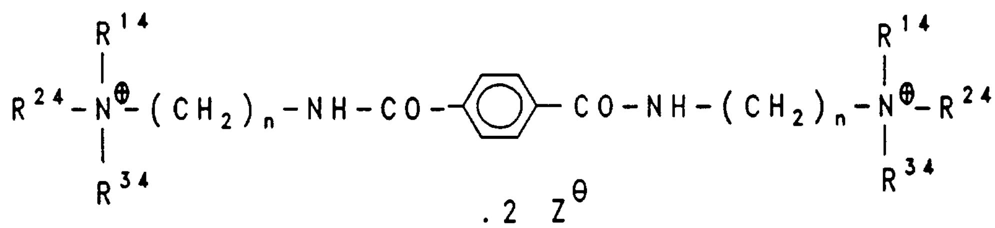

(4)

worin

$R^{14}$, $R^{24}$ und $R^{34}$ gleiche oder verschiedene Alkylreste mit 1 bis 5 C-Atomen, vorzugsweise Methyl, sind,
n für eine ganze Zahl von 2 bis 5 steht, und
$Z^-$ für ein stöchiometrisches Äquivalent eines Anions steht, vorzugsweise für ein Tetraphenylborat-Anion.

Weiterhin geeignet sind Diallylammoniumverbindungen, wie beschrieben in DE-A-4 142 541, insbesondere solche der Formel (5)

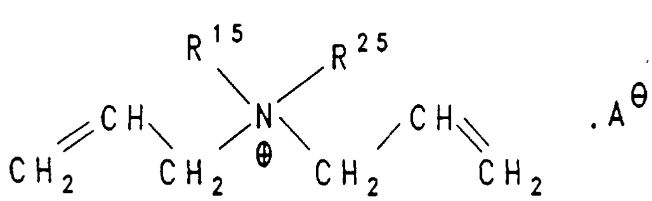

(5)

worin

$R^{15}$ und $R^{25}$ gleiche oder verschiedene Alkylgruppen mit 1 bis 5, vorzugsweise 1 oder 2, C-Atomen bedeuten, insbesondere aber für Methylgruppen stehen und
$A^-$ für ein stöchiometrisches Äquivalent eines Anions steht, vorzugsweise für ein Tetraphenylborat-Anion steht, sowie die aus diesen erhältlichen polymeren Ammoniumverbindungen der Formel (6), wie beschrieben in DE-A-4 029 652 oder DE-A-4 103 610,

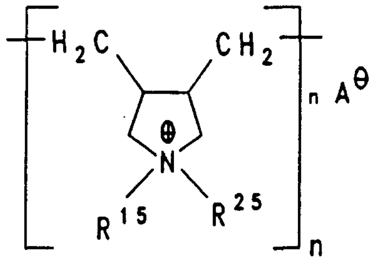

(6)

worin n einen Wert hat, der Molekulargewichten von 5000 bis 500000 entspricht. Besonders bevorzugt sind jedoch Verbindungen der Formel (6) mit Molekulargewichten von 40000 bis 400000.

Weiterhin geeignet sind Arylsulfid-Derivate, wie beschrieben in DE-A-4 031 705, insbesondere solche der Formel (7)

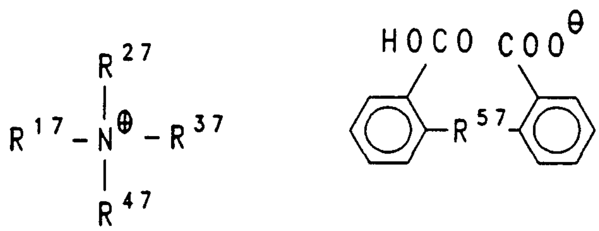

(7)

worin

$R^{17}$, $R^{27}$, $R^{37}$ und $R^{47}$ gleiche oder verschiedene Alkylgruppen mit 1 bis 5, vorzugsweise 2 oder 3, C-Atomen bedeuten, und
$R^{57}$ einer der zweiwertigen Reste -S-, -S-S-, -SO- oder $-SO_2-$ ist. Beispielsweise sind $R^{17}$ bis $R^{47}$ Propylgruppen und $R^{57}$ die Gruppe -S-S-.

Weiterhin geeignet sind Phenolderivate, wie beschrieben in EP-A-0 258 651, insbesondere solche der Formel (8)

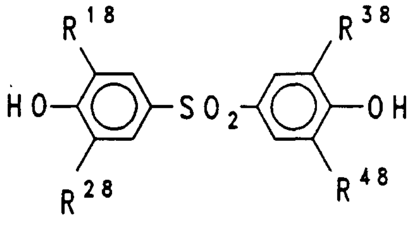

(8)

worin
$R^{18}$ und $R^{38}$ Alkyl- oder Alkenylgruppen mit 1 bis 5, vorzugsweise 1 bis 3, C-Atomen, und $R^{28}$ und $R^{48}$ Wasserstoff oder Alkyl mit 1 bis 3 C-Atomen, vorzugsweise Methyl, bedeuten.
Als Beispiele seien die Verbindungen genannt, in denen $R^{18}$ bis $R^{48}$ Methylgruppen sind oder in denen $R^{28}$ und $R^{48}$ Wasserstoff sind und $R^{18}$ und $R^{38}$ für die Gruppe $-CH_2\text{-}CH{=}CH_2$ stehen.

Weiterhin geeignet sind Phosphoniumverbindungen und fluorierte Phosphoniumverbindungen, wie beschrieben in US-A-5 021 473 und in US-A-5 147 748, insbesondere solche der Formeln (9)

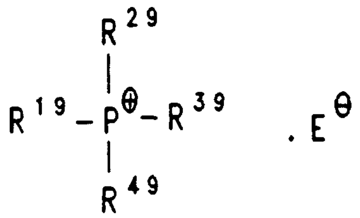

(9)

worin
$R^{19}$, $R^{29}$, $R^{39}$ und $R^{49}$ gleiche oder verschiedene Alkylgruppen mit 1 bis 8, vorzugsweise 3 bis 6, C-Atomen, bedeuten und $E^{\theta}$ für ein stöchiometrisches Äquivalent eines Anions steht, vorzugsweise für ein Halogenid-Anion;
und (10)

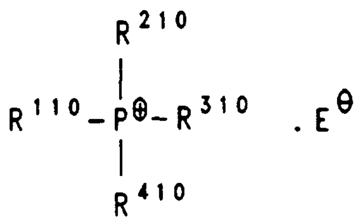

(10)

worin

$R^{110}$ ein hochfluorierter Alkylrest mit 5 bis 15, vorzugsweise 6 bis 10, C-Atomen,
$R^{210}$, $R^{310}$ und $R^{410}$ Alkyl mit 3 bis 10 C-Atomen oder Phenyl sind.

Als Beispiel für eine Verbindung der Formel (9) sei genannt Tetrabutylphosphonium-bromid, als Beispiele für Verbindungen der Formel (10) seien genannt die Verbindungen mit $R^{110} = C_8F_{17}\text{-}CH_2\text{-}CH_2\text{-}$, $R^{210}=R^{310}=R^{410}=$ Phenyl und $E^{\theta} = PF_6^{\ominus}$ oder das Tetraphenylborat-Anion.
Weiterhin geeignet sind Calix(n)arene, wie beschrieben in EP-A-0 385 580 und wie beschrieben in EP-A-0 516 434, insbesondere solche der Formel (11)

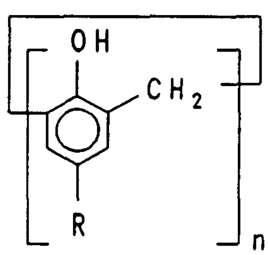

(11)

worin
R für Wasserstoff, Halogen, vorzugsweise Chlor, geradkettiges oder verzweigtes Alkyl mit 1 bis 12 C-Atomen, Aralkyl, z.B. Benzyl oder Phenethyl, $-NO_2$, $-NH_2$ oder $NHR^{111}$ steht, wobei $R^{111}$ Alkyl mit 1 bis 8 C-Atomen, gegebenenfalls $C_1$-$C_4$-alkylsubstituiertes Phenyl oder $-Si(CH_3)_3$ bedeutet.
Weiterhin geeignet sind Metallkomplexverbindungen, wie Chrom-, Kobalt-, Eisen-, Zink- oder Aluminium-Azokomplexe oder Chrom-, Kobalt-, Eisen-, Zink- oder Aluminium-Salicyl- oder Borsäurekomplexe der Formeln (12), (13) und (14)

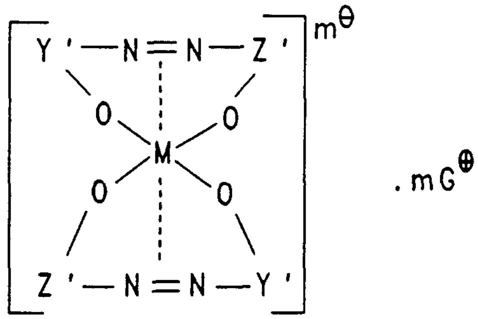

(12)

worin

M ein 2-oder 3-wertiges Metallatom, vorzugsweise Chrom, Kobalt, Eisen, Zink oder Aluminium bedeutet, oder auch ein Nichtmetall wie Bor oder Si,
Y' und Z' für zweibindige aromatische Ringe, vorzugsweise der Formeln

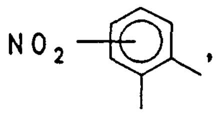
,
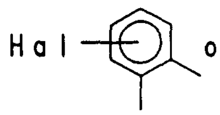
oder
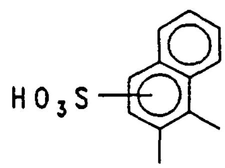

stehen, und m eine der Zahlen 1 oder 2 ist;

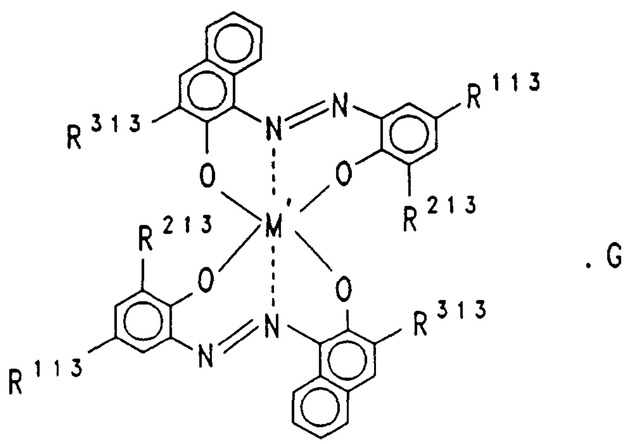

(13)

worin

M' ein 2- oder 3-wertiges Metallatom, vorzugsweise Chrom, Kobalt, Eisen,
$R^{113}$ Wasserstoff, Halogen, vorzugsweise Cl, Nitro oder Amidosulfonyl,
$R^{213}$ Wasserstoff oder Nitro,
$R^{313}$ Wasserstoff, die Sulfonsäuregruppe, -CO-NH-$R^{413}$ ist, wobei $R^{413}$ Phenyl, Alkyl mit 1 bis 5 C-Atomen, das gegebenenfalls durch eine Mono-, Di- oder Trialkylaminogruppe substituiert ist, bedeutet und
G in Formel (12) und (13) jeweils ein Gegenion ist, das die Neutralität des Komplexes herstellt, vorzugsweise ein oder mehrere Protonen, ein oder mehrere Alkali- oder Ammonium-Ionen;

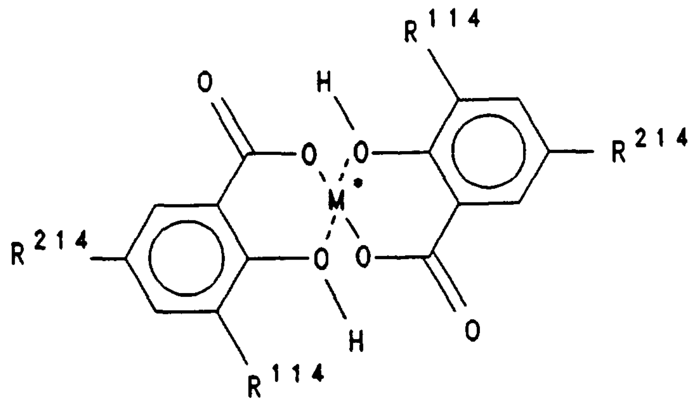

(14)

worin

$M^*$ ein zweiwertiges Metall-Zentralatom, vorzugsweise ein Zinkatom,
$R^{114}$ und $R^{214}$ gleiche oder verschiedene, geradkettige oder verzweigte Alkylgruppen mit 1 bis 8, vorzugsweise 3 bis 6, C-Atomen, beispielsweise tert. Butyl, bedeuten.

Derartige Verbindungen sind beschrieben in EP-A-0 162 632, US-A-4 908 225, EP-A-0 393 479,EP-A-0 360 617, EP-A-0 291 930, EP-A-0 280 272, EP-A-0 255 925, EP-A-0 251 326, EP-A-0 180 655, EP-A-0 141 377, US-A-4 939 061, US-A-4 623 606, US-A-4 590 141 und/oder charakterisiert durch die CAS-Nummern 31714-55-3, 104815-18-1, 84179-68-8, 110941-75-8, 32517-36-5, 38833-00-00, 95 692-86-7, 85414-43-3, 136709-14-3, 135534-82-6, 135534-81-5, 127800-82-2, 114803-10-0, 114803-08-6.

Beispiele für besonders bevorzugte Metallkomplexverbindungen der Formel (13) sind in der folgenden Tabelle 2 angegeben:

Tabelle 2

| $R^{113}$ | $R^{213}$ | $R^{313}$ | $R^{413}$ | M' | G |
|---|---|---|---|---|---|
| Cl | H | H | - | Cr | $H^+$ |
| $NO_2$ | $NO_2$ | $-CONHR^{413}$ | Phenyl | Cr | $H^+/Na^+/NH_4^+$ |
| Cl | H | $-CONHR^{413}$ | Phenyl | Fe | $H^+/Na^+/NH_4^+$ |
| Cl | H | $-CONHR^{413}$ | $-(CH_2)_3-$ $-N^+(CH_3)_3$ | Cr | $Cl^-$ |
| $-SO_2NH_2$ | H | H | - | Co | $H^+/Na^+/NH_4^+$ |

Weiterhin geeignet sind Benzimidazolone, wie beschrieben in EP-A-0 347 695, insbesondere solche der Formel (15)

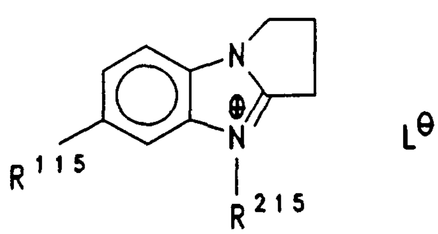

(15)

worin
$R^{115}$ ein Alkyl mit 1 bis 5 C-Atomen und $R^{215}$ ein Alkyl mit 1 bis 12 C-Atomen und L ein stöchiometrisches Äquivalent

eines Anions, insbesondere ein Chlorid- oder Tetrafluoborat-Anion ist.
Als Beispiel sei die Verbindung mit $R^{115}$= $CH_3$ und $R^{215}$ = $C_{11}H_{23}$ genannt.

Weiterhin geeignet sind ringförmig verknüpfte Oligosaccharide, wie beschrieben in DE-A-4 418 842, insbesondere solche der Formel (16)

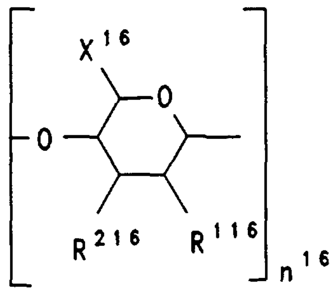

(16)

worin $n^{16}$ eine Zahl zwischen 3 und 100 ist, $R^{116}$ und $R^{216}$ die Bedeutung OH, $OR^{316}$, wobei $R^{316}$ substituiertes oder unsubstituiertes Alkyl-($C_1$-$C_{18}$), Aryl-($C_6$-$C_{12}$) oder Tosyl bedeuten, und $X^{16}$ die Bedeutung $CH_2OH$ oder $CH_2COR^{316}$ hat. Als Beispiele seien genannt:

$n^{16}$ = 6, $R^{116}$ und $R^{216}$ = OH, $X^{16}$ = $CH_2OH$
$n^{16}$ = 7, $R^{116}$ und $R^{216}$ = OH, $X^{16}$ = $CH_2OH$
$n^{16}$ = 8, $R^{116}$ und $R^{216}$ = OH, $X^{16}$ = $CH_2OH$.

Weiterhin geeignet sind Polymersalze, wie beschrieben in DE-A-4 332 170, deren anionische Komponente ein Polyester ist, der aus dem Reaktionsprodukt der einzelnen Komponenten a), b) und c) sowie gegebenenfalls d) und gegebenenfalls e) besteht, wobei

a) eine Dicarbonsäure oder ein reaktives Derivat einer Dicarbonsäure, welche frei von Sulfogruppen sind,
b) eine difunktionelle aromatische, aliphatische oder cycloaliphatische Sulfoverbindung, deren funktionelle Gruppen Hydroxyl oder Carboxyl, oder Hydroxyl und Carboxyl, sind,
c) ein aliphatisches, cycloaliphatisches oder aromatisches Diol, ein Polyetherdiol oder ein Polycarbonatdiol,
d) eine polyfunktionelle Verbindung (Funktionalität > 2), deren funktionelle Gruppen Hydroxyl oder Carboxyl, oder Hydroxyl und Carboxyl, sind und
e) eine Monocarbonsäure ist

und deren kationische Komponente Wasserstoffatome oder Metallkationen sind.

Weiterhin geeignet sind Azine der folgenden Color-Index-Nummern: C.I. Solvent Black 5, 5:1, 5:2, 7, 31 und 50; C.I.Pigment Black 1, C.I. Basic Red 2 und C.I. Basic Black 1 und 2.

Grundsätzlich ist das erfindungsgemäße Pigment besonders geeignet in Kombination mit positiven und negativen Ladungssteuermitteln (CCA). Wie z.B. die Beispiele 4.4.2 bis 4.4.5 zeigen, genügen schon kleine Mengen (z. B. 1 %) an CCA, um die gewünschte Polarität einzustellen. Ein besonderer Vorteil hierbei ist das schnelle Erreichen des Aufladungsspitzenwertes und dessen sehr gute Konstanz. Da für eine gute triboelektrische (Toner)aufladung ein hoher Tonerdurchgangswiderstand notwendig ist (= geringe Leitfähigkeit), tragen die dielektrischen Kenndaten des erfindungsgemäßen Gelbpigments zu dem guten triboelektrischen Verhalten bei (Ku/Liepins "Electrical Properties of Polymers" Hanser Publishers, Munich-Vienna-New York, 1987).

Die Kombination von Pigment und Ladungssteuermittel kann nachträglich durch physikalisches Mischen während der Pigmentsynthese, während des Finishvorganges oder durch entsprechendes Aufziehen auf die Pigmentoberfläche (Pigmentcoating) erfolgen.

Gegenstand der Erfindung ist ferner ein elektrophotographischer Toner oder Entwickler, enthaltend ein übliches Tonerbindemittel, 0,01 bis 50 Gew.-%, vorzugsweise 0,5 bis 20 Gew.-%, des erfindungsgemäßen Azopigments und 0,01 bis 20 Gew.-%, vorzugsweise 0,1 bis 5 Gew.-%, eines Ladungssteuermittels aus der Klasse der Triphenylmethane, Ammonium- und Immoniumverbindungen; fluorierten Ammonium- und Immoniumverbindungen; biskationischen Säureamide; polymeren Ammoniumverbindungen; Diallylammoniumverbindungen; Arylsulfid-Derivate; Phenolderivate; Phosphoniumverbindungen und fluorierten Phosphoniumverbindungen; Calix(n)arene; Cyclodextrine; Polyestersalze; Metallkomplexverbindungen; Benzimidazolone; Azine, Thiazine oder Oxazine.

Besonders bevorzugt sind elektrophotograhische Toner oder Entwickler, die als Ladungssteuermittel eine

Verbindung der Formel (17)

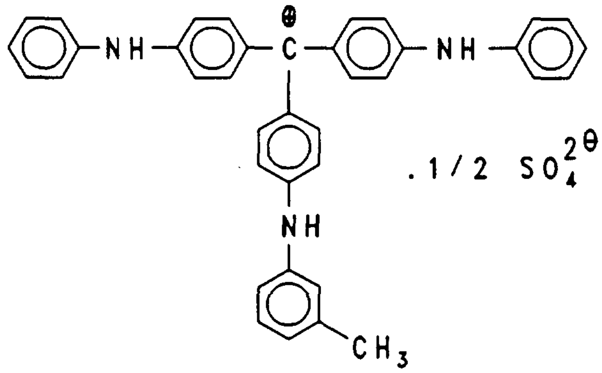

(17);

oder eine Verbindung der vorstehend genannten Formel (3);
oder eine Verbindung der vorstehend genannten Formel (5), worin $R^{15}$ und $R^{25}$ jeweils Methyl und $A^{\theta}$ ein Tetraphenylborat-Anion ist;
oder eine Verbindung der vorstehend genannten Formel (6), worin $R^{15}$ und $R^{25}$ jeweils Methyl, $A^{\theta}$ ein Tetraphenylborat-Anion ist und n einen Wert hat, der Molekulargewichten von 5000 bis 500 000 entspricht;
oder eine Verbindung der vorstehend genannten Formel (7);
oder eine Verbindung der vorstehend genannten Formel (13), worin $R^{113}$ Chlor, $R^{213}$ und $R^{313}$ Wasserstoff, M' Chrom, Kobalt oder Eisen und G ein oder zwei Protonen ist;
oder ein vorstehend genanntes Polymersalz, dessen anionische Komponente ein Polyester ist, enthalten.

Die gute Eignung des erfindungsgemäßen Gelbpigments für die Pulverlackanwendung erkennt man an dem bereits bei 3 bar Sprühdruck sehr hohem Ladestrom (1,7 µA in Beispiel 4.4.5 bzw. 1,5 µA in Beispiel 3.4.5) wobei typischerweise ein Ladestrom von 1 µ A als Mindestvoraussetzung für eine genügende Aufladung angesehen wird. Einhergehend mit dem hohen Ladestrom ist eine gute Abscheidequote von jeweils deutlich über 80 %.

Gegenstand der Erfindung ist ferner ein Pulver oder Pulverlack, enthaltend ein epoxid-, carboxyl- oder hydroxylgruppenhaltiges Polyester- oder Acrylharz oder eine Kombination daraus, 0,01 bis 50 Gew.-%, vorzugsweise 0,1 bis 5 Gew.-%, des erfindungsgemäßen Azopigments und 0,01 bis 20 Gew.-%, vorzugsweise 1 bis 5 Gew.-%, eines Ladungssteuermittels aus den vorstehend für elektrophotographische Toner genannten Klassen und bevorzugten Verbindungen.

Das erfindungsgemäß verwendete Pigment wird in einer Konzentration von 0,01 bis 50 Gew.-%, vorzugsweise von 0,5 bis 20 Gew.-%, besonders bevorzugt von 0,1 bis 5,0 Gew.-%, bezogen auf die Gesamtmischung, in das Bindemittel des jeweiligen Toners, Entwicklers, Lacks, Pulverlacks, Elektretmaterials oder des elektrostatisch zu trennenden Polymers homogen, beispielsweise durch Extrudieren oder Einkneten, eingearbeitet. Dabei kann das erfindungsgemäß eingesetzte Pigment als getrocknetes und gemahlenes Pulver, Dispersion oder Suspension in organischen oder anorganischen Lösungsmitteln, Preßkuchen, Masterbatch, Präparation, angeteigte Paste, als auf geeignete Träger, wie z.B. Kieselgur, $TiO_2$, $Al_2O_3$, aus wäßriger oder nicht-wäßriger Lösung aufgezogene Verbindung oder in sonstiger Form zugegeben werden. Ebenso kann das erfindungsgemäß verwendete Pigment grundsätzlich auch schon bei der Herstellung der jeweiligen Bindemittel zugegeben werden, d.h. im Verlauf von deren Polymerisation, Polyaddition oder Polykondensation.

Die Höhe der elektrostatischen Aufladung der elektrophotographischen Toner oder der Pulverlacke, in welche das erfindungsgemäße Pigment homogen eingearbeitet wird, kann nicht vorhergesagt werden und wird an Standardtestsystemen unter gleichen Bedingungen (gleiche Dispergierzeiten, gleiche Teilchengrößenverteilung, gleiche Teilchenform) bei etwa 20°C und 50 % relativer Luftfeuchte gemessen. Die elektrostatische Aufladung des Toners erfolgt durch Verwirbelung mit einem Carrier, d.h. einem standardisierten Reibungspartner (3 Gewichtsteile Toner auf 97 Gewichtsteile Carrier), auf einer Rollbank (150 Umdrehungen pro Minute). Anschließend wird an einem üblichen q/m-Meßstand die elektrostatische Aufladung gemessen (J.H. Dessauer, H.E. Clark, "Xerography and related Processes", Focal Press, N.Y., 1965, Seite 289; J.F. Hughes, "Electrostatic Powder Coating", Research Studies Press Ltd. Letchworth, Hertfordshire, England, 1984, Chapter 2). Bei der Bestimmung des q/m-Wertes oder der Triboaufladung von Pulverlacken ist die Teilchengröße von großem Einfluß, weshalb bei den durch Sichtung erhaltenen Toner- oder Pulverlackproben streng auf einheitliche Teilchengrößenverteilung geachtet wird. So wird für Toner eine mittlere Teilchengröße von 10 µm angestrebt, während für Pulverlacke eine mittlere Teilchengröße von 50 µm praktikabel ist.

Die Triboversprühung der Pulver(lacke) wird mit einem Sprühgerät mit einem Normsprührohr und einer Sterninnenstange bei maximalem Pulverdurchsatz mit einem Sprühdruck von 3 bar durchgeführt. Der zu besprühende Gegenstand wird hierzu in einer Spritzkabine aufgehängt und aus ca. 20 cm Abstand direkt von vorne ohne weitere Bewegung des Sprühgerätes besprüht. Die jeweilige Aufladung des versprühten Pulvers wird anschließend mit einem "Meßgerät zur Messung von triboelektrischer Ladung von Pulvern" der Firma Intec (Dortmund) gemessen. Zur Messung wird die Meßantenne des Meßgerätes direkt in die aus dem Sprühgerät austretende Pulverwolke gehalten. Die aus der elektrostatischen Ladung von Pulverlack oder Pulver sich ergebende Stromstärke wird in µA angezeigt. Die Abscheidequote wird anschließend in % durch eine Differenzwiegung aus versprühtem und abgeschiedenem Pulverlack bestimmt.

Die Transparenz des erfindungsgemäßen Gelbpigments in Tonerbindemittelsystemen wird wie folgt untersucht: In 70 Gew.-Teile eines Rohfirnis (bestehend aus 15 Gew.-Teilen des jeweiligen Tonerharzes und 85 Gew.-Teilen Ethylacetat) werden 30 Gew.-Teile des pigmentierten Testtoners (Herstellung siehe Anwendungsbeispiel 1) mit einem Dissolver eingerührt (5 min bei 5000 upm).

Der so erzeugte Testtonerfirnis wird gegen einen gleichermaßen erzeugten Standardpigmentfirnis mit einem Handcoater (Fa. RK Chemical Co. Ltd, England) auf geeignetes Papier (z.B. Buchdruckpapier) aufgerakelt. Eine geeignete Rakelgröße ist z.B. K bar N 3 ( = 24 µm Rakelschichtdicke). Das Papier hat zur besseren Bestimmung der Transparenz einen schwarzen Balken aufgedruckt, die Transparenzunterschiede in dL-Werten werden nach DIN 55 988 bestimmt, bzw. nach der Prüfvorschrift Marketing Pigmente, Hoechst AG "Visuelle und Farbmetrische Bewertung" vom 13.09.1990 (Nr. 1/1) bewertet.

Der bei der Pigmentcharakterisierung angegebene Restsalzgehalt beschreibt die spezifische Leitfähigkeit des Extraktes einer wäßrigen Pigmentsuspension (Gemäß Prüfvorschrift Marketing Pigmente, Hoechst AG Nr. 1/10 (2/91) "Bestimmung der spezifischen Leitfähigkeit am Extrakt einer wäßrigen Pigmentsuspension"), der entsprechend angegebene pH-Wert wird nach der Prüfvorschrift Marketing Pigmente, Hoechst AG Nr. 1/9 (2/91) "Bestimmung des pH-Wertes am Extrakt einer wäßrigen Pigmentsuspension" bestimmt, wobei bei beiden Bestimmungsmethoden bidestilliertes Wasser anstelle des in der Prüfvorschrift genannten E-Wasser (= entionisiertes Wasser) verwendet wird.

Beispiel 1

1.1 Pigmentsynthese

a) 73,2 g (0,3 mol) 1,2-Bis(2-aminophenoxy)-ethan werden in 300 ml Wasser mit 150 ml Salzsäure (31 % HCl) in das Hydrochlorid überführt und mit Eis auf 0 bis 5°C eingestellt. Anschließend wird durch Zugabe von 41,8 g Natriumnitrit in Form einer wäßrigen Lösung mit 40 Gew.-% $NaNO_2$ diazotiert. Der Nitritüberschuß wird nach 15 min mit Amidosulfonsäure zerstört.

b) 150,8 g (0,68 mol) 5-Acetoacetylaminobenzimidazol-2-on werden in 900 ml Wasser mit 150 ml Natronlauge (33 Gew.-% NaOH) gelöst, mit Eis auf 5°C gestellt und in Gegenwart von 12 g Dimethylcocosalkylaminoxid mit Essigsäure bis pH 5,3 gefällt.

c) Die anschließende Kupplung wird bei 25°C innerhalb von 10 min durchgeführt. Man gibt noch 40 g pulverisierte Kreide zu und stellt nach 10 min auf pH 5. Das Pigment wird filtriert und salzfrei gewaschen.
Ausbeute: praktisch quantitativ.
Von einer getrockneten Probe des Filterkuchens wird die spezifische Oberfläche nach BET bestimmt: 1 $m^2/g$ ("Prä-pigment")

d) 110 g Pigment werden mit 1400 g Wasser und 910 g Isobutanol für 2 Stunden auf 110°C in einem Autoklaven unter dem sich aufbauenden Druck erhitzt. Das Pigment wird in der üblichen Weise isoliert. Eine getrocknete Probe weist eine spezifische Oberfläche von 78 $m^2/g$ auf.

1.2 Pigmentcharakteristik

| | |
|---|---|
| BET-Oberfläche | 78 $m^2/g$ |
| Restfeuchte | 0,7 % (Karl-Fischer) |
| Restsalzgehalt | 0,1 mS/cm |

(fortgesetzt)

| | |
|---|---|
| pH | 7 |
| Thermostabilität | Beginnende Zersetzung ca. 350°C, Zersetzungsmaximum ca. 365°C, DTA, 3°C/min Aufheizrate; geschlossene Glasampulle); |

Teilchengröße und -form (elektronenmikroskopisch ausgezählte Massenverteilung):

Teilchengröße und Teilchenform werden durch elektronenmikroskopische Aufnahme des Pigmentpulvers bestimmt. Hierzu wird das Pigment 15 min in Wasser dispergiert und anschließend aufgesprüht. Die Aufnahmen erfolgen bei 3700-facher und 34000-facher Vergrößerung.

Teilchengröße:

$d_{50}$ = 61 nm; $d_{10}$ = 44 nm; $d_{95}$ = 118 nm.

Teilchenform:

Das Länge-Breite-Verhältnis wurde bestimmt mit 1,53:1. Die Aufnahmen zeigen annähernd würfelförmige Teilchen (keine ausgeprägte Nadelform wie im Vergleich).

| Röntgenbeugungsdiagramm | | |
|---|---|---|
| 2 Theta | Relative Intensität % | Halbwertsbreite |
| 25,5 | 100 | 0,71 |
| 13,3 | 90 | 0,83 |
| 6,6 | 59 | 0,68 |
| 9,5 | 51 | 0,54 |
| 19,3 | 45 | 0,93 |
| 17,4 | 22 | 0,81 |
| 28,3 | 21 | 0,70 |

sowie einige weitere kleinere Banden und Schultern.

1.3 Transparenz

In einem Tonerharz (Polyester auf Bisphenol-A-Basis) wurde eine verbesserte Transparenz gemessen (24 µm Schichtdicke), wobei der pigmentierte Testtoner wie in Beispiel 1.4.1 hergestellt wurde.
Gegenüber dem im Vergleichsbeispiel angegebenen Standard wird über dem schwarzen Balken ein dL-Wert von -1,98 gemessen (d.h. der schwarze Balken erscheint dunkler), d.h. das Pigment ist ca. 3 transparenter als der Vergleich.
Bewertung der Transparenzunterschiede nach Prüfvorschrift 1/1: 1 ≙ Spur, 2 ≙ etwas; 3 ≙ merklich; 4 ≙ deutlich; 5 ≙ wesentlich; 6 ≙ bedeutend transparenter.

1.4 Elektrostatische Eigenschaften

5 Teile des Pigmentes aus Beispiel 1.1 werden mittels eines Kneters innerhalb von 45 Min. in 95 Teile eines Tonerbindemittels (Polyester auf Bisphenol-A-Basis) homogen eingearbeitet. Anschließend wird auf einer Labor-Universalmühle gemahlen und dann auf einem Zentrifugalsichter klassifiziert. Die gewünschte Teilchenfraktion (4 bis 25 µm) wird mit einem Carrier aktiviert, der aus mit Silikon beschichteten Magnetit-Teilchen der Größe 50 bis 200 µm (Schüttdichte 2,75 g/cm$^3$) besteht. (FBM 96-100; Fa. Powder Techn.)
Die Messung erfolgt an einem üblichen q/m-Meßstand. Durch Verwendung eines Siebes mit einer Maschenweite von 25 µm wird sichergestellt, daß bei den Tonerausblasungen kein Carrier mitgerissen wird. Die Messungen erfolgen bei 40 bis 60 %iger relativer Luftfeuchte. In Abhängigkeit von der Aktivierdauer werden folgende q/m-Werte [µC/g] gemessen:

| Aktivierdauer | Aufladung q/m [µC/g] |
|---|---|
| 10 Min. | 0 |
| 30 Min. | 0 |
| 2 Std. | -7 |
| 24 Std. | -8 |

Beispiel 2

2.1 Pigmentsynthese

Man verfährt analog Beispiel 1 mit folgenden Änderungen:

a) Anstelle von 12 g Dimethylcocosalkylaminoxid werden je 6 g eines Alkyl-Ethylenoxidpolyglykolphosphats, z.B. ® Hostaphat L, und eines Fettalkoholpropylglykolethers auf Basis von Isotridecylalkohol, z.B. ® Genapol X 060 (Hoechst AG), zugegeben und
b) die anschließende Kupplung wird bei 25°C in 30 Minuten durchgeführt.

Spezifische BET Oberfläche ohne Lösemittelbehandlung (getrocknete Filterkuchen): 9,6 $m^2$/g. Fertiges Pigment nach Lösemittelbehandlung: 62 $m^2$/g

2.2 Pigmentcharakteristik

| | |
|---|---|
| BET Oberfläche | 62 $m^2$/g |
| Restfeuchte | 0,5 % (Karl-Fischer) |
| Restsalzgehalt | 0,1 mS/cm |
| pH | 7,1 |

Röntgenbeugungsdiagramm:

| 2 Theta | Relative Intensität % | Halbwertsbreite |
|---|---|---|
| 25,5 | 100 | 0,68 |
| 13,3 | 80 | 0,58 |
| 6,6 | 57 | 0,66 |
| 9,5 | 46 | 0,5 |
| 19,4 | 41 | 1,3 |
| 29,4 | 21 | 0,6 |
| 12,6 | 19 | 0,54 |

sowie einige weitere kleinere Banden und Schultern.

2.3 Transparenz

Die Transparenz wird wie in Beispiel 1.3 beschrieben gemessen. Gegenüber dem Vergleich wird ein dL von -1,28 (d.h. knapp 3 transparenter) gefunden.

2.4 Elektrostatische Eigenschaften

5 Teile des Pigmentes werden, wie in Beispiel 1.4 beschrieben, in ein Tonerbindemittel eingearbeitet, wobei als Tonerbindemittel anstelle des Polyesters ein Styrolacrylat 60:40 Copolymer, z.B. ® Dialec S 309 genommen wird,

und vermessen:

| Aktivierdauer | Aufladung q/m [µC/g] |
|---|---|
| 10 Min. | -4 |
| 30 Min. | -8 |
| 2 Std. | -11 |
| 24 Std. | -11 |

Beispiel 3

3.1 Pigmentsynthese

Man verfährt analog Beispiel 2, aber mit der Änderung, daß die Kupplung bei 25°C in 10 Minuten durchgeführt wird.

3.2 Pigmentcharakterisierung

| | |
|---|---|
| BET Oberfläche | 70 $m^2$/g |
| Restfeuchte | 0,2 % $H_2O$ (Karl-Fischer) |
| Restsalzgehalt | 0,1 mS/cm |
| pH | 7,1 |
| Thermostabilität: | Beginnende Zersetzung ca. 350°C, Zersetzungsmaximum ca. 360°C (DTA, 3°C/min Aufheizrate; geschlossene Glasampulle) |

Teilchengröße und -form (elektronenmikroskopisch ausgezählte Massenverteilung):

Teilchengröße:
$d_{50}$ =104 nm; $d_{10}$ = 70 nm; $d_{95}$ = 170 nm.

Teilchenform:

Das Länge-Breite-Verhältnis wurde bestimmt mit 1,45:1.
Die Aufnahmen zeigen annähernd würfelförmige Teilchen (keine ausgeprägte Nadelform wie im Vergleich).

| Röntgenbeugungsdiagramm: | | |
|---|---|---|
| 2 Theta | Relative Intensität % | Halbwertsbreite |
| 25,5 | 100 | 0,73 |
| 13,3 | 91 | 0,87 |
| 6,6 | 60 | 0,69 |
| 9,5 | 49 | 0,57 |
| 19,4 | 42 | 1,2 |
| 17,4 | 21 | 0,89 |
| 28,3 | 16 | 0,67 |

sowie einige weitere kleinere Banden und Schultern.

| Dielektrische Kenndaten: | |
|---|---|
| Ω·cm | $10^{12}$ |

(fortgesetzt)

| Dielektrische Kenndaten: | |
|---|---|
| ε | 4,4 (1 kHz) |
| tan δ | $5 \cdot 10^{-2}$ (1 kHz) |

3.3 Transparenz

Die Transparenz wird, wie in Beispiel 1.3 beschrieben, gemessen. Gegenüber dem Vergleich wird ein dL von -1,91 (d.h. ca. 3 transparenter) gefunden.

3.4 Elektrostatische Eigenschaften

3.4.1 5 Teile des Pigmentes aus Beispiel 3.1 werden mittels eines Kneters innerhalb von 45 Min. in 95 Teile eines Tonerbindemittels (Polyester auf Bisphenol-A-Basis) homogen eingearbeitet. Anschließend wird auf einer Labor-Universalmühle gemahlen und dann auf einem Zentrifugalsichter klassifiziert. Die gewünschte Teilchenfraktion (4 bis 25 µm) wird mit einem Carrier aktiviert, der aus mit Silikon beschichteten Magnetit-Teilchen der Größe 50 bis 200 µm (Schüttdichte 2,75 g/cm$^3$) besteht. (FBM 96-100; Fa. Powder Techn:)

Die Messung erfolgt an einem üblichen q/m-Meßstand. Durch Verwendung eines Siebes mit einer Maschenweite von 25 µm wird sichergestellt, daß bei den Tonerausblasungen kein Carrier mitgerissen wird. Die Messungen erfolgen bei 40 bis 60 %iger relativer Luftfeuchte. In Abhängigkeit von der Aktivierdauer werden folgende q/m-Werte [µC/g] gemessen:

| Aktivierdauer | Aufladung q/m [µC/g] |
|---|---|
| 10 Min. | + 3 |
| 30 Min. | + 2 |
| 2 Std. | -2 |
| 24 Std. | -5 |

3.4.2 5 Teile des Pigmentes und 1 Teil des in DE-A-3 901 153, Herstellungsbeispiel 1, beschriebenen Ladungssteuermittels (hochgradig fluoriertes Ammoniumsalz) der Formel

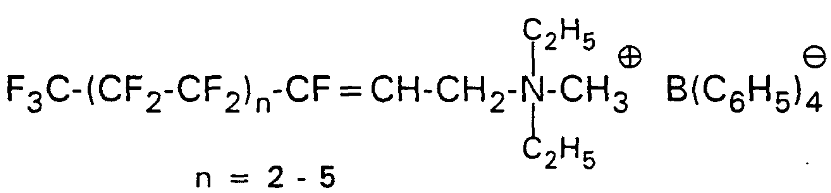

n = 2 - 5

werden wie in Beispiel 1.4 beschrieben in ein Tonerbindemittel eingearbeitet und vermessen. In Abhängigkeit von der Aktivierdauer werden folgende q/m-Werte [µC/g] gemessen.

| Aktivierdauer | Aufladung q/m [µC/g] |
|---|---|
| 10 Min. | -17 |
| 30 Min. | -17 |
| 2 Std. | -19 |
| 24 Std. | -16 |

3.4.3 5 Teile des Pigmentes und 1 Teil des in DE-A-4 103 610, Herstellungsbeispiel 2, beschriebenen Ladungssteuermittels (Kationisches Polymer) der Formel

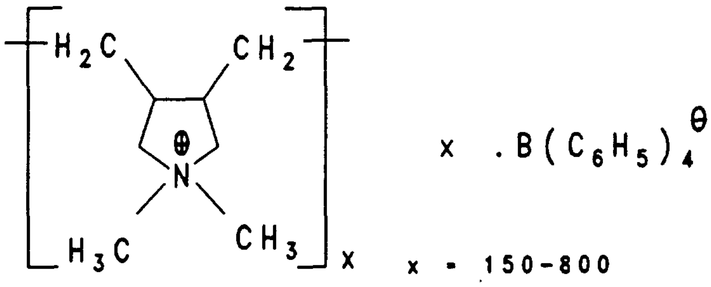

x = 150-800

werden, wie in Beispiel 1.4.1 beschrieben, in ein Tonerbindemittel eingearbeitet und vermessen. In Abhängigkeit von der Aktivierdauer werden folgende q/m-Werte [µC/g] gemessen.

| Aktivierdauer | Aufladung q/m [µC/g] |
|---|---|
| 10 Min. | -10 |
| 30 Min. | -10 |
| 2 Std. | -11 |
| 24 Std. | -12 |

3.4.4 5 Teile des Pigmentes und 1 Teil des in der EP-A2-0 644 463 Herstellungsbeispiel 1.2.4 beschriebenen Ladungssteuermittels (Polyestersalz) werden, wie in Beispiel 1.4 beschrieben, in ein Tonerbindemittel eingearbeitet und vermessen. In Abhängigkeit von der Aktivierdauer werden folgende q/m-Werte [µC/g] gemessen.

| Aktivierdauer | Aufladung q/m [µC/g] |
|---|---|
| 10 Min. | -2 |
| 30 Min. | -6 |
| 2 Std. | -12 |
| 24 Std. | -11 |

3.4.5 5 Teile des Pigmentes aus Herstellungsbeispiel 3.1 werden, wie in Anwendungsbeispiel 1.4 beschrieben, in 95 Teile eines Pulverlackbindemittels auf Basis eines Triglycidylisocyanurat (TGIC)-Polyesters homogen eingearbeitet. Zur Bestimmung der Abscheidequote werden 30 g des Test-Pulverlackes mit einem definierten Druck durch eine Tribopistole versprüht. Durch Differenzwiegung läßt sich die abgeschiedene Pulverlackmenge bestimmen und eine Abscheidequote in % definieren sowie durch die Ladungsübertragung ein Stromfluß (µA) abgreifen.

| Druck [bar] | Strom [µA] | Abscheidequote [%] |
|---|---|---|
| 3 | 1,5 | 86 |

3.5 Eigenschaften in Druckfarben

3.5.1 NC (Nitrocellulose)-Druck

Die Prüfung wird gemäß der Prüfvorschrift Marketing Pigmente, Hoechst AG "NC-Tiefdruck" Ausgabe 7/94 (Nr. 3/3) in den Mischungen A und B (transparent und deckend) durchgeführt.

Gegenüber dem im Vergleichsbeispiel angegebenen Standard (100 %, Novoperm-Gelb P-HG) wurden folgende Werte bestimmt:

| | |
|---|---|
| Farbstärke | 110 % |
| Farbton | 3 grüner |
| Reinheit | 3 reiner |

(fortgesetzt)

| | |
|---|---|
| Transparenz | 4 transparenter |
| Glanz | 4 glänzender |

3.6 Eigenschaft in Kunststoffen

3.6.1 PVC (Polvinylchlorid)

Die Prüfung in Weich- und Hart PVC wird in Anlehnung an DIN 53775 gemäß den Prüfvorschriften Marketing Pigmente, Hoechst AG "Prüfung in Weich PVC" (Ausgabe 7/93, Nr. 4/3) und "Prüfung in Hart-PVC" (Ausgabe 4/87, Nr. 4/4) durchgeführt.

Gegenüber dem im Vergleichsbeispiel angegebenen Standard (100 %, Novoperm-Gelb P-HG) wurden bei 130°C und 160°C Einarbeitungstemperatur folgende Werte bestimmt:

| | |
|---|---|
| Farbstärke | 112 % |
| Farbton | 3 grüner |
| Reinheit | 2 reiner |
| Transparenz | 3-4 transparenter |
| Ausblutechtheit | unverändert |
| Dispergierbarkeit | unverändert |

3.6.2 Polyolefin (Polyethylen)

Die Prüfung in Polyethylen wird gemäß der Prüfvorschrift Marketing Pigmente, Hoechst AG "Coloristische Prüfung von Farbmitteln in thermoplastischen Kunststoffen" (Ausgabe 4/93, Nr. 4/12) bzw. "Prüfung von Farbmitteln auf ihre Hitzebeständigkeit in thermoplastischen Kunststoffen im Spritzgießverfahren nach DIN 53722" (Ausgabe 3/94, Nr. 4/13) in ® Hostalen GC 7260 durchgeführt.

Gegenüber dem im Vergleichsbeispiel angegebenen Standard (100 %, Novoperm-Gelb P-HG) wurde gefunden:

| | |
|---|---|
| Farbstärke | 114 % |
| Temperaturbeständigkeit | 290°C (Standard aus Vergleichsbeispiel: 290°C) |

Beispiel 4

4.1 Pigmentsynthese

Man verfährt analog Beispiel 3 mit der Änderung, daß die abschließende Lösemittelbehandlung des Präpigmentes in Wasser/Isobutanol über 2 Stunden bei ca. 90°C erfolgt.

4.2 Pigmentcharakterisierung

| | |
|---|---|
| BET Oberfläche | 76 $m^2/g$ |
| Restfeuchte | 0,6 % $H_2O$ (Karl-Fischer) |
| Restsalzgehalt | O,12 mS/cm |
| pH | 7,1 |
| Thermostabilität | (DTA, wie im Bsp. 1.2. Beginnende Zersetzung ca. 350°C, Zersetzungsmaximum ca. 355°C). |

Teilchengröße und -form (elektronenmikroskopisch ausgezählte Massenverteilung)

Teilchengröße:
$d_{50}$= 119 nm; $d_{10}$ = 73 nm; $d_{95}$ = 185 nm;

Teilchenform:

Das Länge-Breite-Verhältnis wurde bestimmt mit 1,48 : 1.
Die Aufnahmen zeigen annähernd würfelförmige Teilchen (keine ausgeprägte Nadelform wie im Vergleich).

| Röntgenbeugungsdaten: | | |
|---|---|---|
| 2 Theta | Relative Intensität % | Halbwertsbreite |
| 25,5 | 100 | 0,78 |
| 13,4 | 87 | 0,91 |
| 6,6 | 60 | 0,78 |
| 9,5 | 49 | 0,59 |
| 19,4 | 38 | 1,3 |
| 28,3 | 23 | 1,3 |
| 17,5 | 19 | 1,0 |

sowie einige weitere kleine Banden und Schultern.

| Dielektrische Kenndaten: | |
|---|---|
| Ω·cm | $10^{12}$ |
| ε | 4,6 (1 kHz) |
| tanδ | $4\cdot10^{-2}$ (1 kHz) |

4.3 Transparenz

Die Transparenz wird wie in Beispiel 1.3 beschrieben, gemessen und mit ca. 3 transparenter bestimmt.

4.4 Elektrostatische Eigenschaften

4.4.1 5 Teile des Pigmentes aus Beispiel 4.1 werden, wie in Beispiel 1.4 beschrieben, in ein Tonerbindemittel eingearbeitet und vermessen. In Abhängigkeit von der Aktivierdauer werden folgende q/m-Werte [µC/g] gemessen:

| Aktivierdauer | Aufladung q/m [µC/g] |
|---|---|
| 10 Min. | + 1 |
| 30 Min. | 0 |
| 2 Std. | -4 |
| 24 Std. | -6 |

4.4.2 5 Teile des Pigmentes und 1 Teil des in DE-A-4 031 705, Beispiel 5, beschriebenen Ladungssteuermittels der Formel

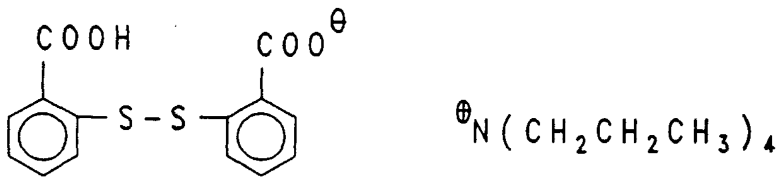

werden, wie in Beispiel 1.4 beschrieben, in ein Tonerbindemittel eingearbeitet und vermessen. In Abhängigkeit von der Aktivierdauer werden folgende q/m-Werte [µC/g] gemessen:

| Aktivierdauer | Aufladung q/m [µC/g] |
|---|---|
| 10 Min. | +4 |
| 30 Min. | +1 |
| 2 Std. | -2 |
| 24 Std. | +1 |

4.4.3 5 Teile des Pigmentes und 1 Teil des in DE-A-3 901 153, Herstellungsbeispiel 1, beschriebenen Ladungssteuermittels (hochgradig fluoriertes Ammoniumsalz) der Formel

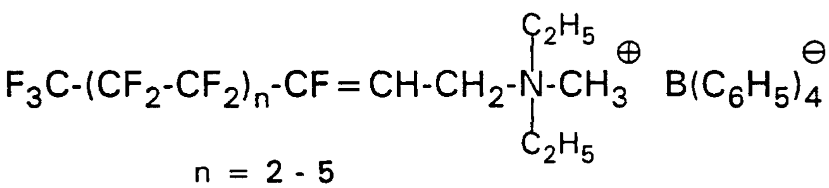

n = 2 - 5

werden, wie in Beispiel 1.4.1 beschrieben, in ein Tonerbindemittel eingearbeitet und vermessen. In Abhängigkeit von der Aktivierdauer werden folgende q/m-Werte [µC/g] gemessen.

| Aktivierdauer | Aufladung q/m [µC/g] |
|---|---|
| 10 Min. | -16 |
| 30 Min. | -16 |
| 2 Std. | -18 |
| 24 Std. | -16 |

4.4.4 5 Teile des Pigmentes und 1 Teil des in DE-A-4 103 610, Herstellungsbeispiel 2, beschriebenen Ladungssteuermittels (kationisches Polymer) der Formel

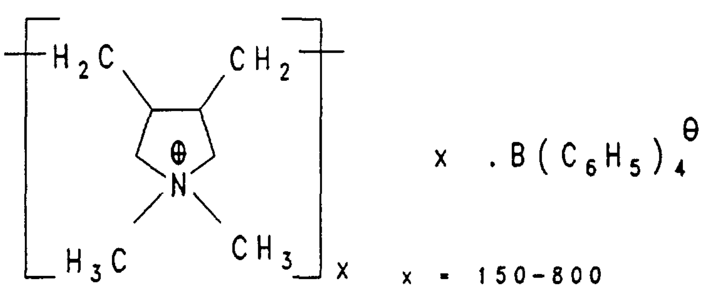

x = 150-800

werden, wie in Beispiel 1.4 beschrieben, in ein Tonerbindemittel eingearbeitet und vermessen. In Abhängigkeit von der Aktivierdauer werden folgende q/m-Werte [µC/g] gemessen.

| Aktivierdauer | Aufladung q/m [µC/g] |
|---|---|
| 10 Min. | -8 |
| 30 Min. | -9 |
| 2 Std. | -9 |
| 24 Std. | -7 |

4.4.5 5 Teile des Pigmentes und 1 Teil des in der Europäischen Patentanmeldung EP-A2-0 664 463, Herstellungsbeispiel 1.2.4, beschriebenen Ladungssteuermittels (Polyestersalz) werden, wie in Beispiel 1.4 beschrieben, in ein Tonerbindemittel eingearbeitet und vermessen. In Abhängigkeit von der Aktivierdauer werden folgende q/m-Werte [µC/g] gemessen.

| Aktivierdauer | Aufladung q/m [µC/g] |
|---|---|
| 10 Min. | -11 |
| 30 Min. | -12 |
| 2 Std. | -11 |
| 24 Std. | -9 |

4.4.6 5 Teile des Pigmentes aus Herstellungsbeispiel 4.1 werden, wie in Beispiel 1.4 beschrieben, in 95 Teile eines Pulverlackbindemittels auf Basis eines TGIC-Polyesters, z.B. ® Uralac P 5010 (DSM, Holland), homogen eingearbeitet. Zur Bestimmung der Abscheidequote werden 30 g des Test-Pulverlackes mit einem definierten Druck durch eine Tribopistole versprüht. Durch Differenzwiegung läßt sich die abgeschiedene Pulverlackmenge bestimmen und eine Abscheidequote in % definieren sowie durch die Ladungsübertragung ein Stromfluß (µA) abgreifen.

| Druck [bar] | Strom [µA] | Abscheidquote [%] |
|---|---|---|
| 3 | 1,7 | 88 |

4.4.7 5 Teile des Pigmentes aus Herstellungsbeispiel 4.1 und 1 Teil ® Bontron E 89, Orient Chemicals, Japan (Calixarenverbindung) werden, wie in Beispiel 1.4 beschrieben, in ein Tonerbindemittel eingearbeitet und vermessen. In Abhängigkeit von der Aktivierdauer werden folgende q/m-Werte [µC/g] gemessen:

| Aktivierdauer | Aufladung q/m [µC/g] |
|---|---|
| 10 Min. | -21 |
| 30 Min. | -12 |
| 2 Std. | -15 |
| 24 Std. | -16 |

4.4.8 5 Teile des Pigmentes aus Herstellungsbeispiel 4.1 und 1 Teil ® Bontron E 84, Orient Chemicals, Japan (Zinksalicylat-Verbindung) werden, wie in Beispiel 1.4 beschrieben, in ein Polyester-Tonerbindemittel eingearbeitet und vermessen. In Abhängigkeit von der Aktivierdauer werden folgende q/m-Werte [µC/g] gemessen:

| Aktivierdauer | Aufladung q/m [µC/g] |
|---|---|
| 10 Min. | -9 |
| 30 Min. | -17 |
| 2 Std. | -15 |
| 24 Std. | -15 |

4.4.9 5 Teile des Pigmentes aus Herstellungsbeispiel 4.1 und 1 Teil des in DE-A-4 418 842, Anwendungsbeispiel 2, beschriebenen Ladungssteuermittels (β-Cyclodextrin) der Formel

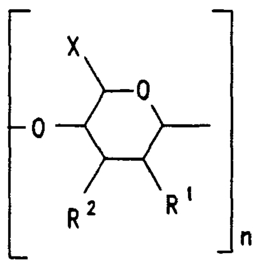

$R^1$ = OH
$R^2$ = OH
n = 7

werden, wie in Beispiel 1.4 beschrieben, in ein Polyester-Tonerbindemittel eingearbeitet und vermessen. In Abhängigkeit von der Aktivierdauer werden folgende q/m-Werte [µC/g] gemessen:

| Aktivierdauer | Aufladung q/m [µC/g] |
|---|---|
| 10 Min. | -17 |
| 30 Min. | -18 |
| 2 Std. | -20 |
| 24 Std. | -19 |

Beispiel 5

5.1 Pigmentsynthese

Man verfährt analog Beispiel 1, arbeitet bei der Fällung des Acetolons jedoch ohne Zusatz von Dimethylcocosalkylaminoxid.

5.2 Pigmentcharakteristik

| | |
|---|---|
| BET-Oberfläche | 75 $m^2/g$ |
| Restfeuchte | 0,6 % |
| Restsalzgehalt | 0,1 mS/cm |
| pH | 7 |
| Thermostabilität | Beginnende Zersetzung ca. 350°C, Zersetzungsmaximum ca. 355°C (DTA, 3°C/min Aufheizrate; geschlossene Glasampulle) |

Vergleichsbeispiel

Als Vergleich dient kommerziell erhältliches Pigment Yellow 180(® Novoperm-Gelb P-HG; Hoechst AG)

Pigmentcharakterisierung:

| | |
|---|---|
| BET Oberfläche | 44 $m^2/g$ |
| Restfeuchte | 0,5 % (Karl-Fischer) |
| Restsalzgehalt | 0,2 mS/cm |
| pH | 6,9 |

(fortgesetzt)

| | |
|---|---|
| Thermostabilität | Beginnende Zersetzung ca. 350°C, Zersetzungsmaximum ca. 365°C (DTA, analog Bsp. 1.2) |

Teilchengröße:

$d_{50}$= 141 nm; $d_{10}$ = 87 nm; $d_{95}$ = 245 nm;

Teilchenform

Das Länge-Breite-Verhältnis wurde bestimmt mit 2,07 : 1.
Die Teilchen zeigen ausgeprägte Nadelform.

| Röntgenbeugungsdiagramm | | |
|---|---|---|
| 2 Theta | Rel. Intensität % | Halbwertsbreite |
| 25,5 | 100 | 0,67 |
| 13,4 | 86 | 0,54 |
| 6,6 | 61 | 0,58 |
| 9,5 | 50 | 0,50 |
| 19,4 | 50 | 1,07 |
| 17,4 | 21 | 0,79 |
| 28,3 | 19 | 0,72 |

sowie einige weitere kleine Banden und Schultern.

| Dielektrische Kenndaten: | |
|---|---|
| Ω·cm | $2 \times 10^{10}$ |
| ε | 4,3 |
| tanδ | $11 \cdot 10^{-2}$ |

Elektrostatische Eigenschaften

Beispiel A

5 Teile des Vergleichspigmentes werden, wie in Beispiel 1.4 beschrieben, in ein Tonerbindemittel eingearbeitet und vermessen. In Abhängigkeit von der Aktivierdauer werden folgende q/m-Werte [µC/g] gemessen.

| Aktivierdauer | Aufladung q/m [µC/g] |
|---|---|
| 10 Min. | -10 |
| 30 Min. | -12 |
| 2 Std. | -20 |
| 24 Std. | -19 |

Beispiel B

5 Teile des Vergleichspigmentes werden, wie in Beispiel 1.4 beschrieben, in ein Tonerbindemittel eingearbeitet (wobei als Tonerbindemittel anstelle des Polyesterharzes ein Styrolacrylat 60:40 Copolymer, z.B. Dialec S 309, genommen wird) und vermessen. In Abhängigkeit von der Aktivierdauer werden folgende q/m-Werte [µC/g] gemessen:

| Aktivierdauer | Aufladung q/m [µC/g] |
|---|---|
| 10 Min. | -17 |

(fortgesetzt)

| Aktivierdauer | Aufladung q/m [µC/g] |
|---|---|
| 30 Min. | -23 |
| 2 Std. | -24 |
| 24 Std. | -24 |

Beispiel C

5 Teile des Vergleichspigmentes und 1 Teil des in DE-A-4 031 705, Beispiel 5, beschriebenen Ladungssteuermittels der Formel

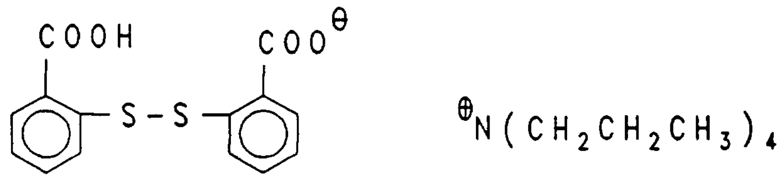

werden, wie in Beispiel 1.4 beschrieben, in das Tonerbindemittel Dialec S 309 eingearbeitet und vermessen. In Abhängigkeit von der Aktivierdauer werden folgende q/m-Werte [µC/g] gemessen.

| Aktivierdauer | Aufladung q/m [µC/g] |
|---|---|
| 10 Min. | +2 |
| 30 Min. | +1 |
| 2 Std. | -4 |
| 24 Std. | -4 |

**Patentansprüche**

**1.** Azopigment der Formel (1)

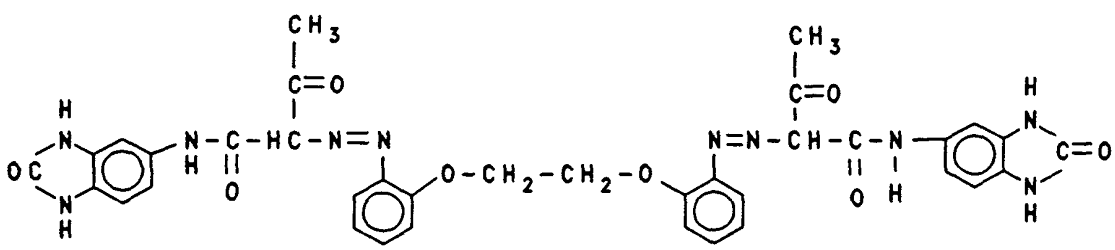

(1)

gekennzeichnet durch eine spezifische Oberfläche des Pigmentpulvers von mehr als 45 $m^2$/g.

**2.** Azopigment nach Anspruch 1, gekennzeichnet durch eine spezifische Oberfläche des Pigmentpulvers von mehr als 55 $m^2$/g, vorzugsweise mehr als 60 $m^2$/g.

**3.** Azopigment nach Anspruch 1 oder 2, gekennzeichnet durch ein Länge-Breite-Verhältnis der Pigmentteilchen von kleiner als 1,6:1.

4. Verfahren zur Herstellung eines Azopigments nach mindestens einem der Ansprüche 1 bis 3 durch Azokupplung von 1,2-Bis(2-aminophenoxy)ethan-Bisdiazoniumsalz (Diazokomponente) mit 5-Acetoacetylaminobenzimidazol-2-on (Kupplungskomponente), dadurch gekennzeichnet, daß man die Azokupplung bei einer Temperatur zwischen 5 und 35°C, vorzugsweise 10 und 30°C, und durch Zugabe der Diazokomponente zur vorgelegten Kupplungskomponente innerhalb von höchstens 30 Minuten, vorzugsweise höchstens 15 Minuten, durchgeführt, gegebenenfalls vor, während oder nach der Azokupplung ein ionisches oder nichtionisches Tensid zugibt und anschließend das entstandene agglomerierte Präpigment einem Lösemittelfinish in einem organischen oder organisch/wäßrigen Medium unterwirft.

5. Verwendung eines Azopigments nach mindestens einem der Ansprüche 1 bis 3 zum Einfärben von Druckfarben, Lacken, Anstrichfarben, Kunststoffen, Gummimaterialien, Büroartikeln, Holzanstrich- und Reinigungsmitteln sowie von Künstlerfarben.

6. Verwendung eines Azopigments nach mindestens einem der Ansprüche 1 bis 3 als Farbmittel in elektrophotographischen Tonern und Entwicklern, in Pulverlacken und Elektretmaterialien, sowie zur Massefärbung von Kunststoffen.

7. Elektrophotographischer Toner oder Entwickler, enthaltend ein Tonerbindemittel, 0,01 bis 50 Gew.-%, vorzugsweise 0,5 bis 20 Gew.-%, des Azopigments nach mindestens einem der Ansprüche 1 bis 3 und 0,01 bis 20 Gew.-%, vorzugsweise 0,1 bis 5 Gew.-%, eines Ladungssteuermittels aus der Klasse der Triphenylmethane; Ammonium- oder Immoniumverbindungen; fluorierten Ammonium- und Immoniumverbindungen; biskationischen Säureamide; polymeren Ammoniumverbindungen; Diallylammoniumverbindungen; Arylsulfid-Derivate; Phenolderivate; Phosphoniumverbindungen und fluorierten Phosphoniumverbindungen; Calix(n)arene; ringförmig verknüpften Oligosaccharide (Cyclodextrine); Polyestersalze; Metallkomplexverbindungen; Benzimidazolone; Azine, Thiazine oder Oxazine.

8. Elektrophotographischer Toner oder Entwickler nach Anspruch 7, dadurch gekennzeichnet, daß das Ladungssteuermittel eine Verbindung der Formel (17)

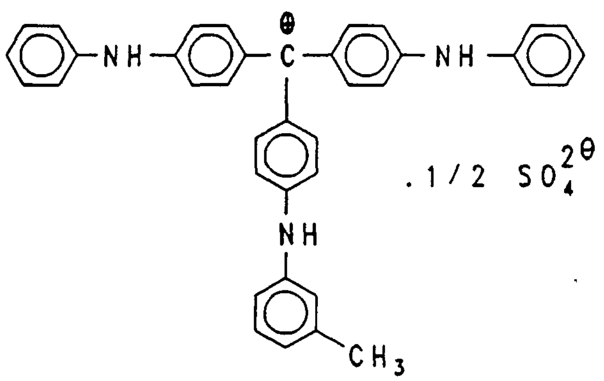

(17);

oder eine Verbindung der Formel (3)

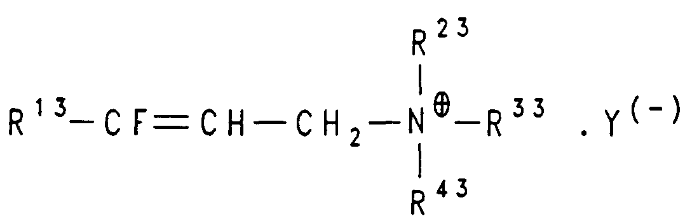

(3)

worin $R^{13}$ perfluoriertes Alkyl mit 5 bis 11 C-Atomen,

$R^{23}$, $R^{33}$ und $R^{43}$ gleich oder verschieden sind und $C_1$-$C_5$-Alkyl bedeuten, und $Y^-$ ein Tetrafluoroborat- oder Tetraphenylborat-Anion ist;
oder eine Verbindung der Formel (5)

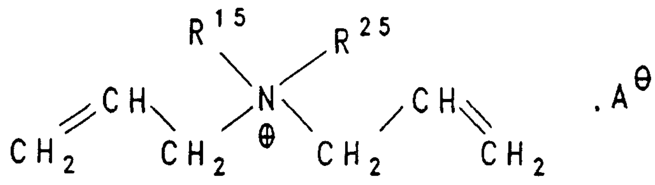

(5)

worin $R^{15}$ und $R^{25}$ jeweils Methyl und $A^\theta$ ein Tetraphenylborat-Anion ist;
oder eine Verbindung der Formel (6)

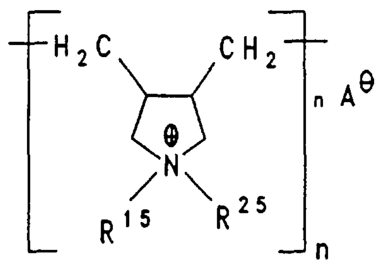

(6)

worin $R^{15}$ und $R^{25}$ jeweils Methyl, $A^\theta$ ein Tetraphenylborat-Anion ist und n einen Wert hat, der Molekulargewichten von 5000 bis 500 000 entspricht;
oder eine Verbindung der Formel (7)

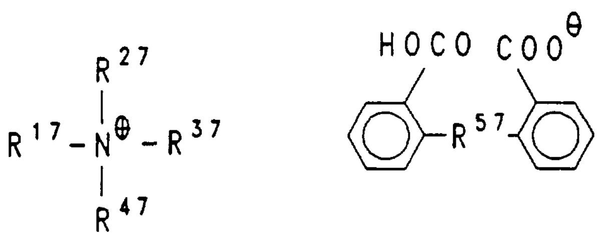

(7)

worin $R^{17}$, $R^{27}$, $R^{37}$ und $R^{47}$ gleiche oder verschiedene $C_1$-$C_5$-Alkylreste und $R^{57}$ ein zweiwertiger Rest -S-, -S-S-, -SO- oder $-SO_2-$ ist;
oder eine Verbindung der Formel (13)

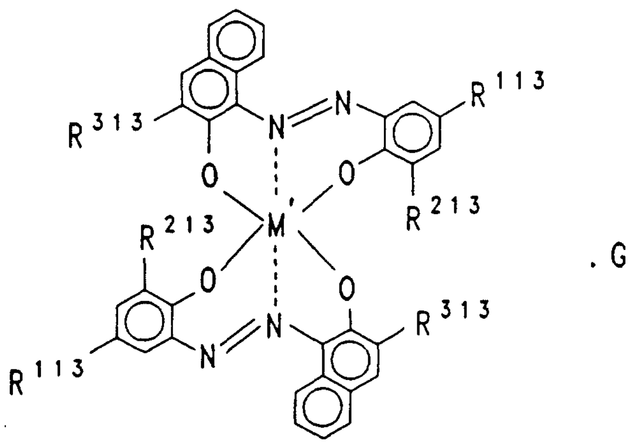

(13)

worin $R^{113}$ Chlor, $R^{213}$ und $R^{313}$ Wasserstoff, M' Chrom, Kobalt oder Eisen und G ein oder zwei Protonen ist; oder ein Polymersalz, dessen anionische Komponente ein Polyester ist, der aus dem Reaktionsprodukt der einzelnen Komponenten a), b) und c) sowie gegebenenfalls d) und gegebenenfalls e) besteht, wobei

a) eine Dicarbonsäure oder ein reaktives Derivat einer Dicarbonsäure, welche frei von Sulfogruppen sind,
b) eine difunktionelle aromatische, aliphatische oder cycloaliphatische Sulfoverbindung, deren funktionelle Gruppen Hydroxyl oder Carboxyl, oder Hydroxyl und Carboxyl, sind,
c) ein aliphatisches, cycloaliphatisches oder aromatisches Diol, ein Polyetherdiol oder ein Polycarbonatdiol,
d) eine polyfunktionelle Verbindung (Funktionalität > 2), deren funktionelle Gruppen Hydroxyl oder Carboxyl, oder Hydroxyl und Carboxyl, sind und
e) eine Monocarbonsäure ist

und dessen kationische Komponente Wasserstoffatome oder Metallkationen sind;
oder eine Verbindung der Formel (11)

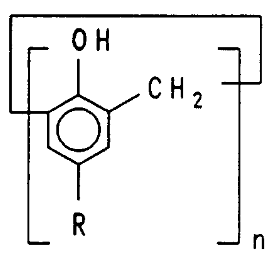

(11)

worin
R für Wasserstoff, Halogen, vorzugsweise Chlor, geradkettiges oder verzweigtes Alkyl mit 1 bis 12 C-Atomen, Aralkyl, vorzugsweise Benzyl oder Phenethyl, $-NO_2$, $-NH_2$ oder $-NHR^{111}$ steht, wobei $R^{111}$ Alkyl mit 1 bis 8 C-Atomen, unsubstituiertes oder $C_1$-$C_4$-alkylsubstituiertes Phenyl oder $-Si(CH_3)_3$ bedeutet;
oder eine Verbindung der Formel (16)

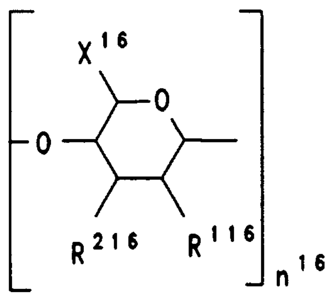

(16)

worin $n^{16}$ eine Zahl zwischen 3 und 100 ist, $R^{116}$ und $R^{216}$ die Bedeutung von OH, $OR^{316}$, wobei $R^{316}$ substituiertes oder unsubstituiertes Alkyl-($C_1$-$C_{18}$), Aryl-($C_6$-$C_{12}$) oder Tosyl bedeuten, und $X^{16}$ die Bedeutung $CH_2OH$ oder $CH_2COR^{316}$ hat, ist.

**9.** Verfahren zur Herstellung eines elektrophotographischen Toners oder Entwicklers nach Anspruch 7 oder 8, dadurch gekennzeichnet, daß das Azopigment und das Ladungssteuermittel homogen in das Tonerbindemittel eingearbeitet werden.

**10.** Pulver oder Pulverlack, enthaltend ein epoxid-, carboxyl- oder hydroxylgruppenhaltiges Polyester- oder Acrylharz oder eine Kombination daraus, 0,01 bis 50 Gew.-%, vorzugsweise 0,5 bis 5 Gew.-%, des Azopigments nach mindestens einem der Ansprüche 1 bis 3 und 0,01 bis 20 Gew.-%, vorzugsweise 1 bis 5 Gew.-%, eines Ladungssteuermittels aus der Klasse der Triphenylmethane; Ammonium- und Immoniumverbindungen; fluorierten Ammonium- und Immoniumverbindungen; biskationischen Säureamide; polymeren Ammoniumverbindungen; Diallylammoniumverbindungen; Arylsulfid-Derivate; Phenolderivate; Phosphoniumverbindungen und fluorierten Phosphoniumverbindungen; Calix(n)arene; ringförmig verknüpften Oligosaccharide (Cyclodextrine); Polyestersalze; Metallkomplexverbindungen; Benzimidazolone; Azine, Thiazine oder Oxazine.

**11.** Pulver oder Pulverlack nach Anspruch 10, dadurch gekennzeichnet, daß das Ladungssteuermittel eine Verbindung der Formel (17)

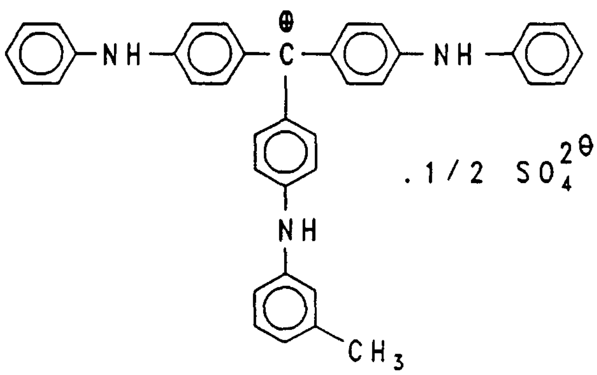

(17);

oder eine Verbindung der Formel (3)

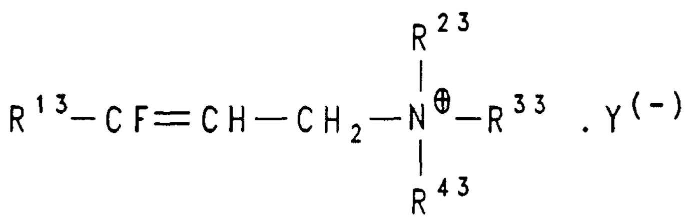

(3)

worin $R^{13}$ perfluoriertes Alkyl mit 5 bis 11 C-Atomen,

$R^{23}$, $R^{33}$ und $R^{43}$ gleich oder verschieden sind und $C_1$-$C_5$-Alkyl bedeuten, und $Y^-$ ein Tetrafluoroborat- oder Tetraphenylborat-Anion ist;
oder eine Verbindung der Formel (5)

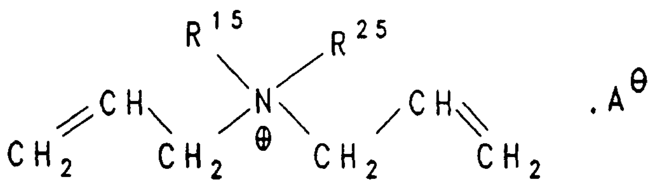

(5)

worin $R^{15}$ und $R^{25}$ jeweils Methyl und $A^{\theta}$ ein Tetraphenylborat-Anion ist;
oder eine Verbindung der Formel (6)

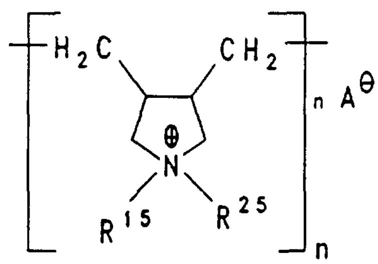

(6)

worin $R^{15}$ und $R^{25}$ jeweils Methyl, $A^{\theta}$ ein Tetraphenylborat-Anion ist und n einen Wert hat, der Molekulargewichten von 5000 bis 500 000 entspricht;
oder eine Verbindung der Formel (7)

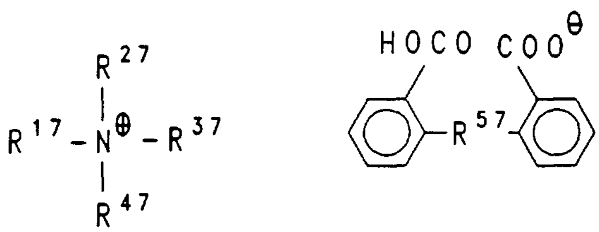

(7)

worin $R^{17}$, $R^{27}$, $R^{37}$ und $R^{47}$ gleiche oder verschiedene $C_1$-$C_5$-Alkylreste und $R^{57}$ ein zweiwertiger Rest -S-, -S-S-, -SO- oder $-SO_2-$ ist;
oder eine Verbindung der Formel (13)

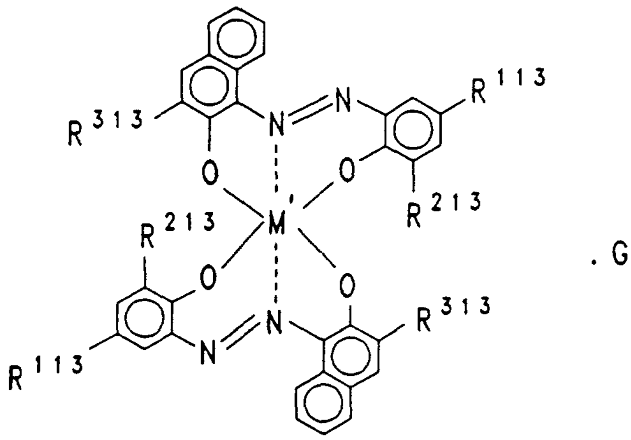

(13)

worin $R^{113}$ Chlor, $R^{213}$ und $R^{313}$ Wasserstoff, M' Chrom, Kobalt oder Eisen und G ein oder zwei Protonen ist; oder ein Polymersalz, dessen anionische Komponente ein Polyester ist, der aus dem Reaktionsprodukt der einzelnen Komponenten a), b) und c) sowie gegebenenfalls d) und gegebenenfalls e) besteht, wobei

a) eine Dicarbonsäure oder ein reaktives Derivat einer Dicarbonsäure, welche frei von Sulfogruppen sind,
b) eine difunktionelle aromatische, aliphatische oder cycloaliphatische Sulfoverbindung, deren funktionelle Gruppen Hydroxyl oder Carboxyl, oder Hydroxyl und Carboxyl, sind,
c) ein aliphatisches, cycloaliphatisches oder aromatisches Diol, ein Polyetherdiol oder ein Polycarbonatdiol,
d) eine polyfunktionelle Verbindung (Funktionalität > 2), deren funktionelle Gruppen Hydroxyl oder Carboxyl, oder Hydroxyl und Carboxyl, sind und
e) eine Monocarbonsäure ist

und dessen kationische Komponente Wasserstoffatome oder Metallkationen sind;
oder eine Verbindung der Formel (11)

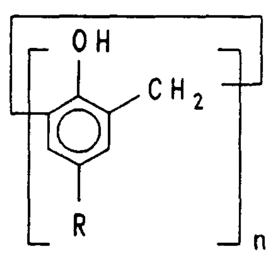

(11)

worin
R für Wasserstoff, Halogen, vorzugsweise Chlor, geradkettiges oder verzweigtes Alkyl mit 1 bis 12 C-Atomen, Aralkyl, vorzugsweise Benzyl oder Phenethyl, $-NO_2$, $-NH_2$ oder $-NHR^{111}$ steht, wobei $R^{111}$ Alkyl mit 1 bis 8 C-Atomen, unsubstituiertes oder $C_1$-$C_4$-alkylsubstituiertes Phenyl oder $-Si(CH_3)_3$ bedeutet;
oder eine Verbindung der Formel (16)

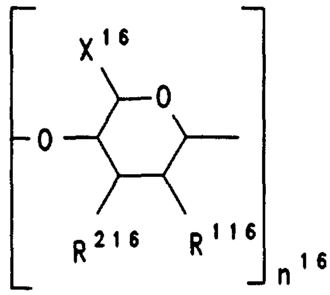

(16)

worin $n^{16}$ eine Zahl zwischen 3 und 100 ist, $R^{116}$ und $R^{216}$ die Bedeutung von OH, $OR^{316}$, wobei $R^{316}$ substituiertes oder unsubstituiertes Alkyl-($C_1$-$C_{18}$), Aryl-($C_6$-$C_{12}$) oder Tosyl bedeuten, und $X^{16}$ die Bedeutung $CH_2OH$ oder $CH_2COR^{316}$ hat, ist.

12. Verfahren zur Herstellung eines Pulvers oder Pulverlacks nach Anspruch 10 oder 11, dadurch gekennzeichnet, daß das Azopigment und das Ladungssteuermittel homogen in das Harz eingearbeitet werden.

## Claims

1. The azo pigment of the formula (1)

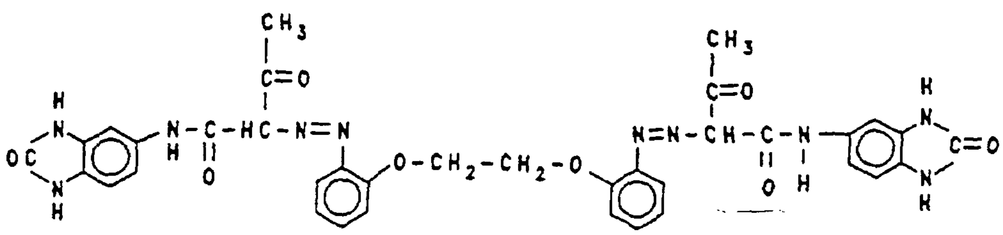

(1)

which has a specific surface area of the pigment powder of more than 45 $m^2/g$.

2. The azo pigment as claimed in claim 1, which has a specific surface area of the pigment powder of more than 55 $m^2/g$, preferably more than 60 $m^2/g$.

3. The azo pigment as claimed in claim 1 or 2, which has a length/width ratio of the pigment particles of less than 1.6:1.

4. A process for the preparation of the azo pigment as claimed in at least one of claims 1 to 3 by azo coupling of 1,2-bis(2-aminophenoxy)ethane bis-diazonium salt (diazo component) with 5-acetoacetylaminobenzimidazol-2-one (coupling component), which comprises carrying out the azo coupling at a temperature of between 5 and 35°C, preferably between 10 and 30°C, and adding the diazo component to the initially charged coupling component over the course of not more than 30 minutes, preferably not more than 15 minutes, with or without the addition prior to, during or after the azo coupling of an ionic or nonionic surfactant, and then subjecting the agglomerated prepigment which has been formed to a solvent finish in an organic or aqueous organic medium.

5. The use of the azo pigment as claimed in at least one of claims 1 to 3 for coloring printing inks, coating materials, paints, plastics, rubber materials, office requisites, cleaning and wood painting compositions and artists' colors.

6. The use of the azo pigment as claimed in at least one of claims 1 to 3 as colorant in electrophotographic toners and developers, in powder coatings and electret materials, and for the mass coloring of plastics.

**7.** An electrophotographic toner or developer comprising a toner binder, from 0.01 to 50% by weight, preferably from 0.5 to 20% by weight, of the azo pigment as claimed in at least one of claims 1 to 3 and from 0.01 to 20% by weight, preferably from 0.1 to 5% by weight, of a charge control agent from the class of the triphenylmethanes; ammonium and iminium compounds; fluorinated ammonium and iminium compounds; biscationic acid amides; polymeric ammonium compounds; diallylammonium compounds; aryl sulfide derivatives; phenol derivatives; phosphonium compounds and fluorinated phosphonium compounds; calix[n]arenes; cyclically linked oligosaccharides (cyclodextrins); polyester salts; metal complex compounds; benzimidazolones; azines, thiazines and oxazines.

**8.** An electrophotographic toner or developer as claimed in claim 7, wherein the charge control agent is a compound of the formula (17)

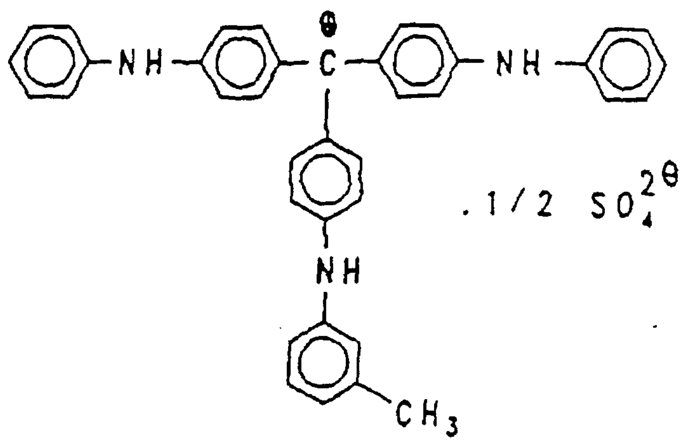

or a compound of the formula (3)

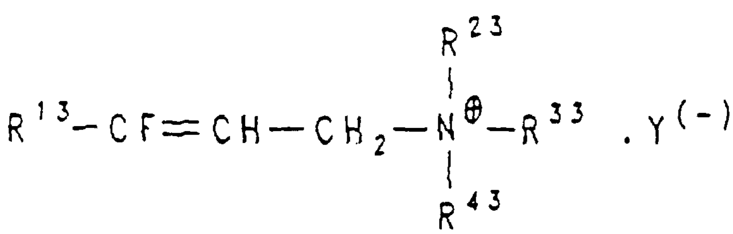

(3)

in which $R^{13}$ is perfluorinated alkyl having 5 to 11 carbon atoms, $R^{23}$, $R^{33}$ and $R^{43}$ are identical or different and are $C_1$-$C_5$-alkyl, and $Y^-$ is a tetrafluoroborate or tetraphenylborate anion;
or a compound of the formula (5)

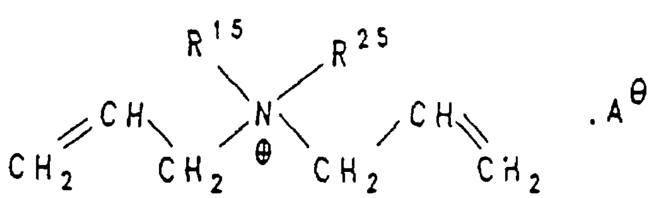

(5)

in which $R^{15}$ and $R^{25}$ are each methyl and $A^\theta$ is a tetraphenylborate anion;
or a compound of the formula (6)

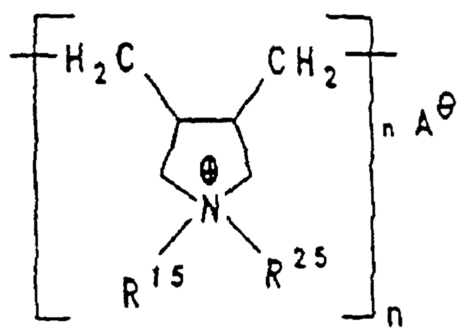

(6)

in which $R^{15}$ and $R^{25}$ are each methyl, $A^{\theta}$ is a tetraphenylborate anion and n has a value which corresponds to molecular weights of from 5000 to 500,000;
or a compound of the formula (7)

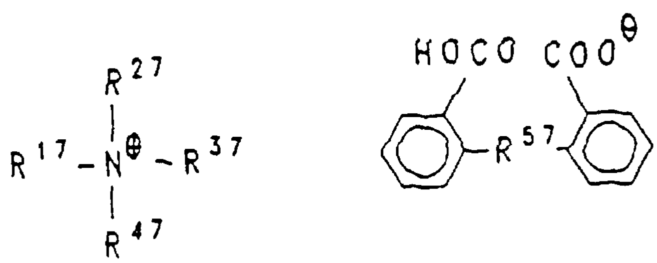

(7)

in which $R^{17}$, $R^{27}$, $R^{37}$ and $R^{47}$ are identical or different $C_1$-$C_5$-alkyl radicals and $R^{57}$ is a divalent radical -S-, -S-S-, -SO- or $-SO_2-$;
or a compound of the formula (13)

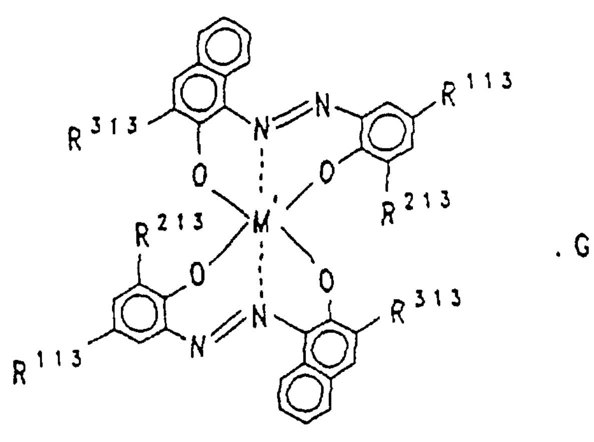

(13)

in which $R^{113}$ is chlorine, $R^{213}$ and $R^{313}$ are hydrogen, M' is chromium, cobalt or iron, and G is one or two protons;
or a polymer salt whose anionic component is a polyester comprising the reaction product of the individual components a), b) and c) and also, if desired, d) and e), where

a) is a dicarboxylic acid or a reactive derivative of a dicarboxylic acid, which is free from sulfo groups,
b) is a difunctional aromatic, aliphatic or cycloaliphatic sulfo compound whose functional groups are hydroxyl or carboxyl or hydroxyl and carboxyl,

c) is an aliphatic, cycloaliphatic or aromatic diol, a polyether diol or a polycarbonate diol,
d) is a polyfunctional compound (functionality > 2) whose functional groups are hydroxyl or carboxyl or hydroxyl and carboxyl, and
e) is a monocarboxylic acid,

and whose cationic component comprises hydrogen atoms or metal cations;
or a compound of the formula (11)

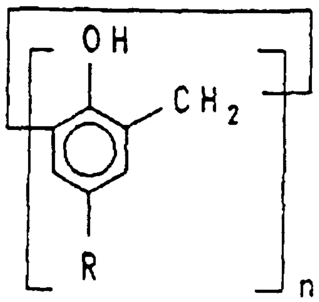

(11)

in which
R is hydrogen, halogen, preferably chlorine, straight-chain or branched alkyl having 1 to 12 carbon atoms, aralkyl, preferably benzyl or phenethyl, $-NO_2$, $-NH_2$ or $-NHR^{111}$, where $R^{111}$ is alkyl having 1 to 8 carbon atoms, unsubstituted or $C_1$-$C_4$-alkyl-substituted phenyl, or $-Si(CH_3)_3$;
or a compound of the formula (16)

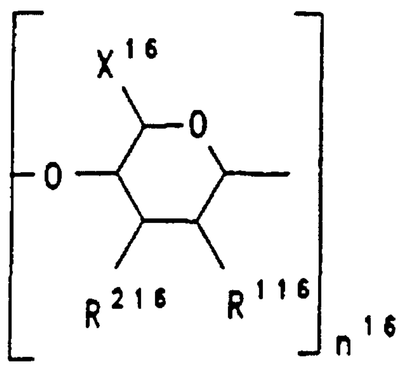

(16)

in which $n^{16}$ is a number between 3 and 100, $R^{116}$ and $R^{216}$ are OH or $OR^{316}$, where $R^{316}$ is substituted or unsubstituted $C_1$-$C_{18}$-alkyl, $C_6$-$C_{12}$-aryl or tosyl, and $X^{16}$ is $CH_2OH$ or $CH_2COR^{316}$.

**9.** A process for the preparation of an electrophotographic toner or developer as claimed in claim 7 or 8, wherein the azo pigment and the charge control agent are incorporated homogeneously into the toner binder.

**10.** A powder or powder coating comprising an acrylic resin or polyester resin which contains epoxide, carboxyl or hydroxyl groups, or a combination of these resins, from 0.01 to 50% by weight, preferably from 0.5 to 5% by weight, of the azo pigment as claimed in at least one of claims 1 to 3, and from 0.01 to 20% by weight, preferably from 1 to 5% by weight, of a charge control agent selected from the class of the triphenylmethanes; ammonium and iminium compounds; fluorinated ammonium and iminium compounds; biscationic acid amides; polymeric ammonium compounds; diallylammonium compounds; aryl sulfide derivatives; phenol derivatives; phosphonium compounds and fluorinated phosphonium compounds; calix[n]arenes; cyclically linked oligosaccharides (cyclodextrins); polyester salts; metal complex compounds; benzimidazolones; azines, thiazines or oxazines.

**11.** A powder or powder coating as claimed in claim 10, wherein the charge control agent is a compound of the formula (17)

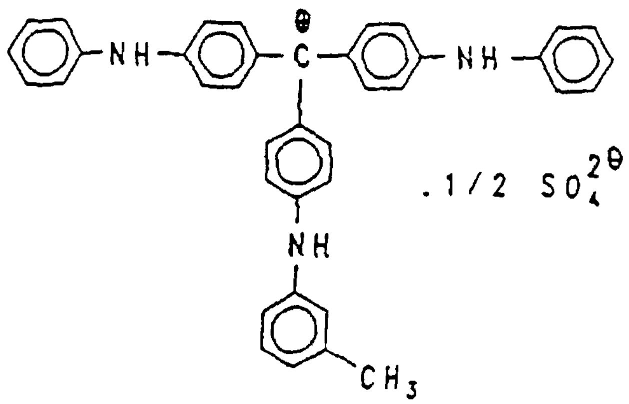

(17);

or a compound of the formula (3)

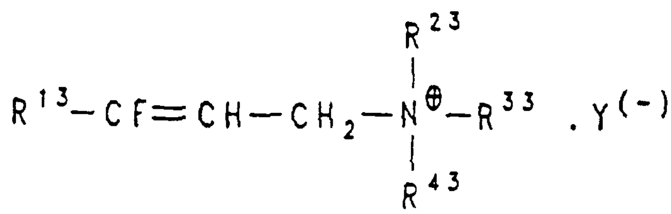

(3)

in which $R^{13}$ is perfluorinated alkyl having 5 to 11 carbon atoms, $R^{23}$, $R^{33}$ and $R^{43}$ are identical or different and are $C_1$-$C_5$-alkyl, and $Y^-$ is a tetrafluoroborate or tetraphenylborate anion;
or a compound of the formula (5)

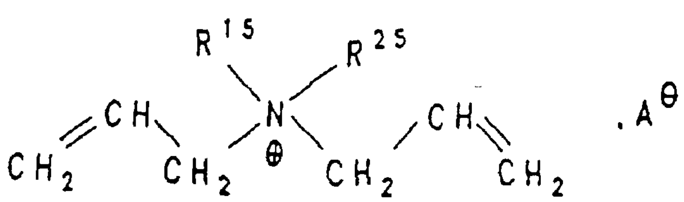

(5)

in which $R^{15}$ and $R^{25}$ are each methyl and $A^{\theta}$ is a tetraphenylborate anion;
or a compound of the formula (6)

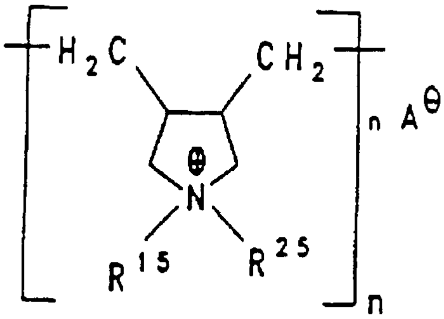

(6)

in which $R^{15}$ and $R^{25}$ are each methyl, $A^{\theta}$ is a tetraphenylborate anion and n has a value which corresponds to molecular weights of from 5000 to 500,000;
or a compound of the formula (7)

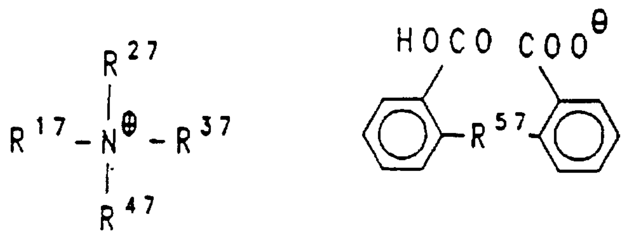

(7)

in which $R^{17}$, $R^{27}$, $R^{37}$ and $R^{47}$ are identical or different $C_1$-$C_5$-alkyl radicals and $R^{57}$ is a divalent radical -S-, -S-S-, -SO- or $-SO_2-$;
or a compound of the formula (13)

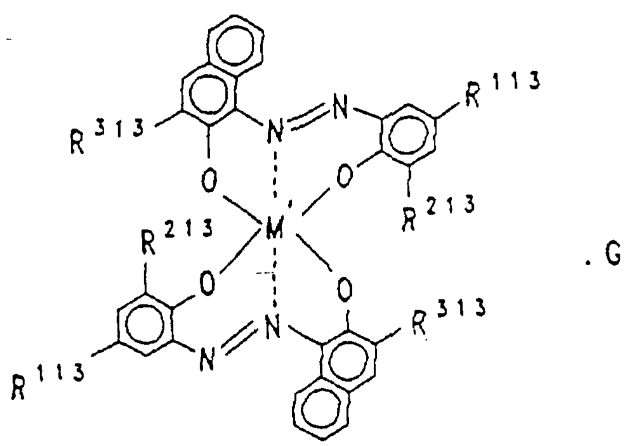

(13)

in which $R^{113}$ is chlorine, $R^{213}$ and $R^{313}$ are hydrogen, M' is chromium, cobalt or iron, and G is one or two protons;
or a polymer salt whose anionic component is a polyester, comprising the reaction product of the individual components a), b) and c) and also, if desired, d) and e), where

a) is a dicarboxylic acid or a reactive derivative of a dicarboxylic acid, which is free from sulfo groups,
b) is a difunctional aromatic, aliphatic or cycloaliphatic sulfo compound whose functional groups are hydroxyl or carboxyl or hydroxyl and carboxyl,
c) is an aliphatic, cycloaliphatic or aromatic diol, a polyether diol or a polycarbonate diol,

d) is a polyfunctional compound (functionality > 2) whose functional groups are hydroxyl or carboxyl or hydroxyl and carboxyl, and
e) is a monocarboxylic acid,

and whose cationic component comprises hydrogen atoms or metal cations;
or a compound of the formula (11)

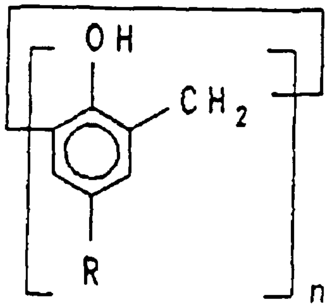

(11)

in which
R is hydrogen, halogen, preferably chlorine, straight-chain or branched alkyl having 1 to 12 carbon atoms, aralkyl, preferably benzyl or phenethyl, $-NO_2$, $-NH_2$ or $-NHR^{111}$, where $R^{111}$ is alkyl having 1 to 8 carbon atoms, unsubstituted or $C_1$-$C_4$-alkyl-substituted phenyl, or $-Si(CH_3)_3$;
or a compound of the formula (16)

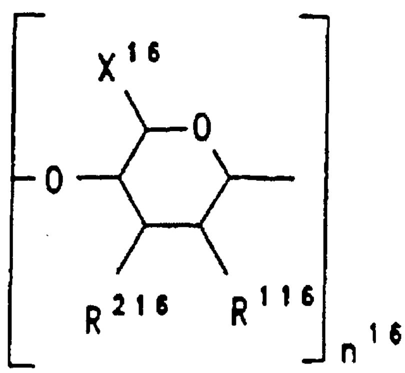

(16)

in which $n^{16}$ is a number between 3 and 100, $R^{116}$ and $R^{216}$ are OH or $OR^{316}$, where $R^{316}$ is substituted or unsubstituted $C_1$-$C_{18}$-alkyl, $C_6$-$C_{12}$-aryl or tosyl, and $X^{16}$ is $CH_2OH$ or $CH_2COR^{316}$.

**12.** A process for the preparation of a powder or powder coating as claimed in claim 10 or 11, wherein the azo pigment and the charge control agent are incorporated homogeneously into the resin.

**Revendications**

**1.** Pigment azoïque de formule

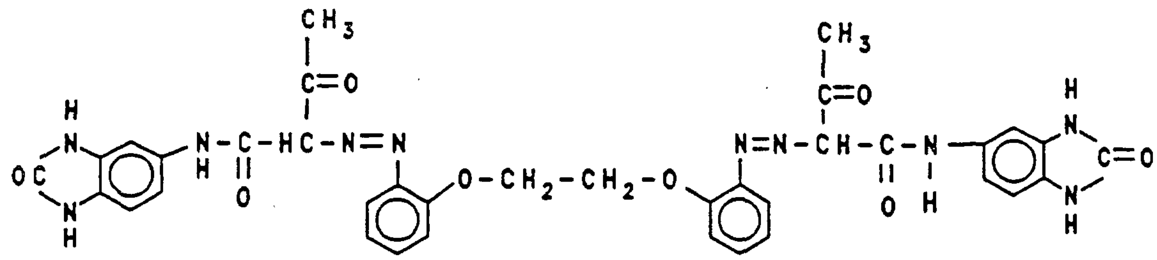

(1)

caractérisé par une surface spécifique de la poudre de pigment supérieure à 45 $m^2/g$.

2. Pigment azoïque selon la revendication 1, caractérisé par une surface spécifique de la poudre de pigment supérieure à 55 $m^2/g$, de préférence supérieure à 60 $m^2/g$.

3. Pigment azoïque selon la revendication 1 ou 2, caractérisé par un rapport longueur-largeur des particules pigmentaires inférieur à 1,6:1.

4. Procédé pour la préparation d'un pigment azoïque selon au moins l'une des revendications 1 à 3, par copulation du sel de bis-diazonium du 1,2-bis(2-aminophénoxy)éthane (constituant diazonium) avec la 5-acétoacétylaminobenzimidazolo-2-one (constituant de copulation), caractérisé en ce qu'on met en oeuvre la copulation azoïque à une température comprise entre 5 et 35°C, de préférence 10 et 30°C, et par addition du constituant diazoïque au constituant de copulation déjà présent, en l'espace d'au maximum 30 minutes, de préférence d'au maximum 15 minutes, éventuellement en ajoutant un agent de surface ionique ou non ionique avant, au cours ou après la copulation azoïque, et ensuite on soumet le prépigment aggloméré obtenu à un traitement de finition au solvant dans un milieu organique ou organique/aqueux.

5. Utilisation d'un pigment azoïque selon au moins l'une des revendications 1 à 3 pour la teinture d'encres d'imprimerie, de vernis, de peintures, de matières plastiques, de caoutchouc, d'articles de bureau, de peintures pour bois et de produits d'entretient ainsi que de peintures d'art.

6. Utilisation d'un pigment azoïque selon au moins l'une des revendications 1 à 3 en tant que colorant dans des toners et révélateurs électrophotographiques, dans des vernis en poudre et des électrètes, ainsi que pour la teinture dans la masse des matières plastiques.

7. Toners et révélateurs électrophotographiques, contenant un liant de toner, de 0,01 à 50 % en masse, de préférence de 0,5 à 20 % en masse, du pigment azoïque selon au moins l'une des revendications 1 à 3, et de 0,01 à 20 % en masse, de préférence de 0,1 à 5 % en masse, d'un agent de contrôle de charge pris dans la classe des triphénylméthanes ; des composés d'ammonium ou d'immonium ; des composés d'ammonium ou d'immonium fluorés ; des amides d'acide biscationiques ; des composés d'ammonium polymères ; des composés de diallylammonium ; des dérivés d'arylsulfures ; des dérivés du phénol ; des composés de phosphonium et des composés de phosphonium fluorés ; des calix(n)arènes ; des oligosaccharides (cyclodextrines) reliés en charnière ; des sels polyester ; des composés de complexes métalliques ; des benzimidazolones ; des azines, thiazines ou oxazines.

8. Toners et révélateurs électrophotographiques selon la revendication 7, caractérisés en ce que l'agent de contrôle de charge est un composé de formule (17)

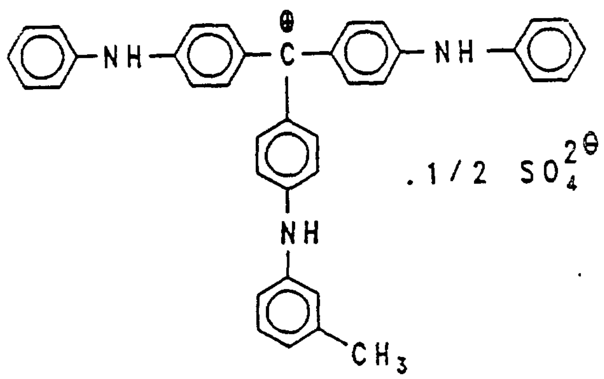

(17) ;

ou un composé de formule (3)

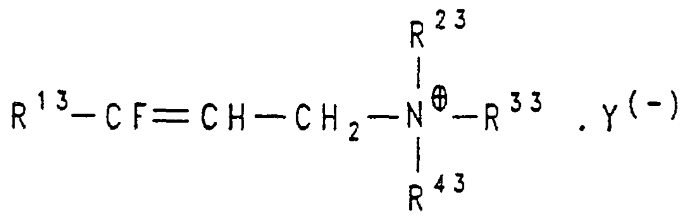

(3)

où $R^{13}$ représente un groupe alkyle perfluoré ayant 5 à 11 atomes de carbone, $R^{23}$, $R^{33}$ et $R^{43}$ sont identiques ou différents et représentent un groupe alkyle en $C_1$-$C_5$, et $Y^-$ représente un anion tétrafluoroborate ou triphénylborate ;
ou un composé de formule (5)

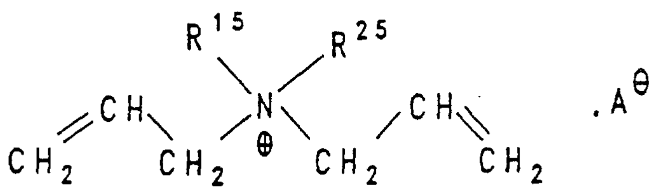

(5)

où $R^{15}$ et $R^{25}$ représentent chacun un groupe méthyle et $A^\theta$ représente un anion tétraphénylborate ;
ou un composé de formule (6)

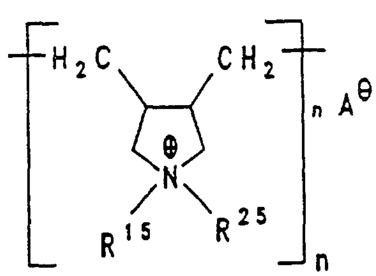

(6)

où $R^{15}$ et $R^{25}$ représentent chacun un groupe méthyle, $A^\theta$ représente un anion tétraphénylborate et n possède une valeur correspondant aux masses molaires de 5000 à 500 000 ;

ou un composés de formule (7)

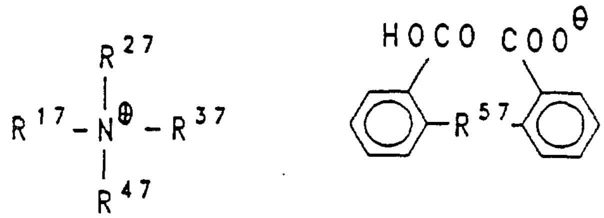

(7)

où $R^{17}$, $R^{27}$, $R^{37}$ et $R^{47}$ représentent des restes alkyle en $C_1$-$C_5$ identiques ou différents et $R^{57}$ est un reste bivalent -S-, -S-S-, -SO- ou -$SO_2$- ;
ou un composé de formule (13)

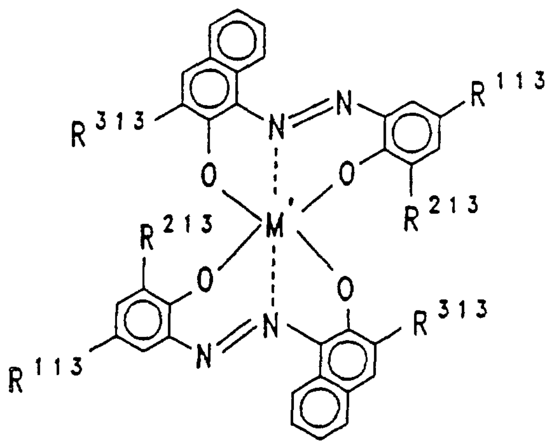

. G

(13)

où $R^{113}$ représente un atome de chlore, $R^{213}$ et $R^{313}$ représentent un atome d'hydrogène, M' représente des atomes de chrome, de cobalte ou de fer et G représente un ou deux protons ;
ou un sel polymère, dont le constituant anionique est un polyester, lequel est constitué par le produit de réaction des différents constituants a), b) et c) ainsi qu'éventuellement d) et éventuellement e), où

a) un acide dicarboxylique ou un dérivé ractif d'un acide dicarboxylique qui sont exempts de groupes sulfo,
b) un composé sulfo bifonctionnel aromatique, aliphatique ou cycloaliphatique, dont les groupes fonctionnels sont hydroxyle ou carboxyle, ou hydroxyle et carboxyle,
c) un diol aliphatique, cycloaliphatique ou aromatique, un polyétherdiol ou un polycarbonatediol,
d) un composé polyfonctionnels (fonctionnalité >2), dont les groupes fonctionnels sont hydroxyle ou carboxyle, ou hydroxyle et carboxyle, et
e) un acide monocarboxylique

et dont les constituants cationiques sont des atomes d'hydrogène ou des cations métalliques ;
ou un composé de formule (11)

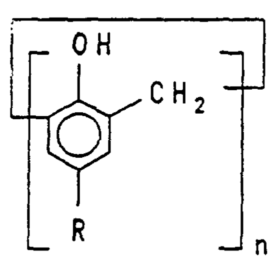

(11)

où

R représente un atome d'hydrogène, un atome d'halogène, de préférence de chlore, des groupes alkyle linéaire ou ramifié ayant 1 à 12 atomes de carbone, aralkyle, de préférence benzyle ou phénéthyle, $-NO_2$, $-NH_2$ ou $-NHR^{111}$, $R^{111}$ représente un groupe alkyle ayant 1 à 8 atomes de carbone, phényle non substitué ou substitué par un substituant alkyle en $C_1$-$C_4$ ou $-Si(CH_3)$ ;

ou un composé de formule (16)

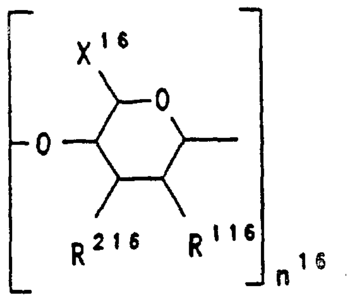

(16)

où $n^{16}$ est un nombre compris entre 3 et 100, $R^{116}$ et $R^{216}$ représentent des groupes OH, $OR^{316}$, où $R^{316}$ représente des groupes substitués ou non susbtitués alkyle en $C_1$-$C_{18}$, aryle en $C_6$-$C_{12}$ ou tosyle, et $X^{16}$ représente des groupes $CH_2OH$ ou $CH_2COR^{316}$.

**9.** Procédé pour la préparation d'un toner ou révélateur électrophotographique selon la revendication 7 ou 8, caractérisé en ce qu'on incorpore le pigment azoïque et l'agent de contrôle de charge dans le liant de toner.

**10.** Poudre ou vernis en poudre contenant une résine acrylique ou polyester contenant des groupes époxyde, carboxyle ou hydroxyle ou une de leurs combinaisons, de 0,01 à 50 % en masse, de préférence de 0,5 à 5 % en masse, du pigment azoïque selon au moins l'une des revendications 1 à 3 et de 0,01 à 20 % en masse, de préférence de 1 à 5 % en masse, d'un agent de contrôle de charge pris dans la classe des triphénylméthanes ; des composés d'ammonium ou d'immonium ; des composés d'ammonium ou d'immonium fluorés ; des amides d'acide biscationiques ; des composés d'ammonium polymères ; des composés de diallylammonium ; des dérivés d'arylsulfures ; des dérivés du phénol ; des composés de phosphonium et des composés de phosphonium fluorés ; des calix(n)arènes ; des oligosaccharides (cyclodextrines) reliés en charnière ; des sels polyester ; des composés de complexes métalliques ; des benzimidazolones ; des azines, thiazines ou oxazines.

**11.** Poudre ou vernis en poudre selon la revendication 10, caractérisé en ce que l'agent de contrôle de charge est un composé de formule 17

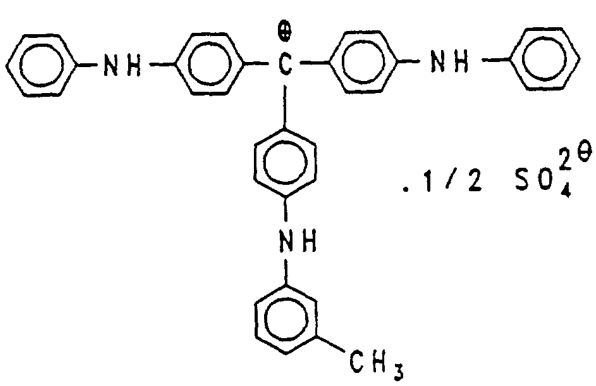

(17) ;

ou un composé de formule (3)

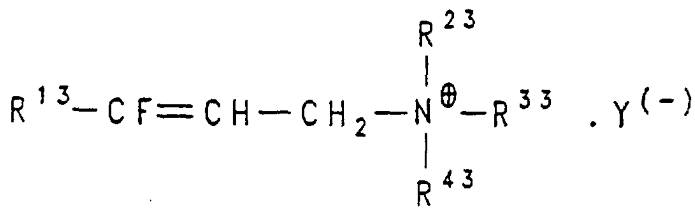

(3)

où $R^{13}$ représente un groupe alkyle perfluoré ayant 5 à 11 atomes de carbone, $R^{23}$, $R^{33}$ et $R^{43}$ sont identiques ou différents et représentent un groupe alkyle en $C_1$-$C_5$, et $Y^-$ représente un anion tétrafluoroborate ou triphénylborate ;
ou un composé de formule (5)

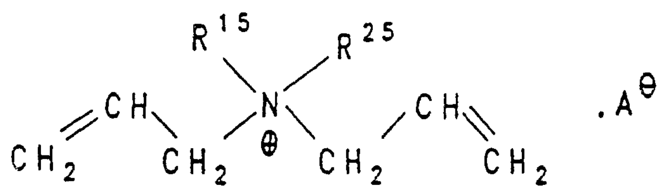

(5)

où $R^{15}$ et $R^{25}$ représentent chacun un groupe méthyle et $A^{\theta}$ représente un anion tétraphénylborate ;
ou un composé de formule (6)

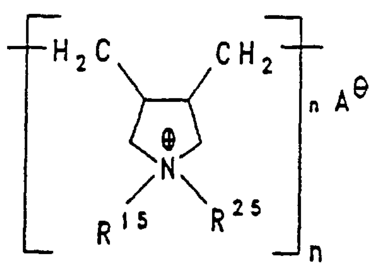

(6)

où $R^{15}$ et $R^{25}$ représentent chacun un groupe méthyle, $A^{\theta}$ représente un anion tétraphénylborate et n possède une valeur correspondant aux masses molaires de 5000 à 500 000 ;
ou un composés de formule (7)

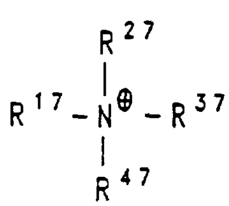

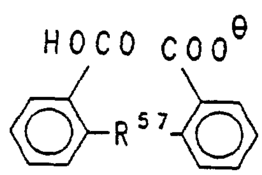

(7)

où $R^{17}$, $R^{27}$, $R^{37}$ et $R^{47}$ représentent des restes alkyle en $C_1$-$C_5$ identiques ou différents et $R^{57}$ est un reste bivalent -S-, -S-S-, -SO- ou -$SO_2$- ;
ou un composé de formule (13)

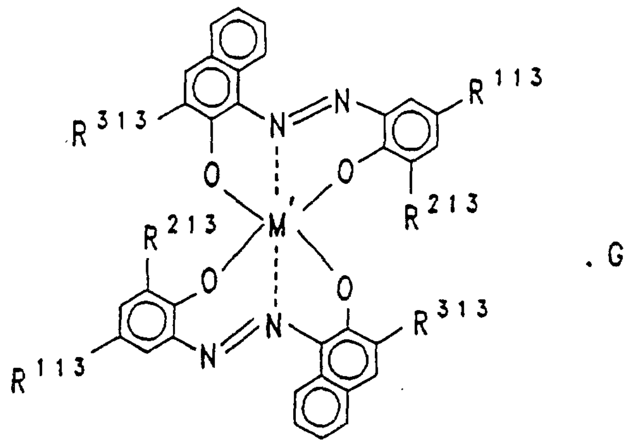

(13)

où $R^{113}$ représente un atome de chlore, $R^{213}$ et $R^{313}$ représentent un atome d'hydrogène, M' représente des atomes de chrome, de cobalte ou de fer et G représente un ou deux protons ;
ou un sel polymère, dont le constituant anionique est un polyester, lequel est constitué par le produit de réaction des différents constituants a), b) et c) ainsi qu'éventuellement d) et éventuellement e), où

a) un acide dicarboxylique ou un dérivé ractif d'un acide dicarboxylique qui sont exempts de groupes sulfo,
b) un composé sulfo bifonctionnel aromatique, aliphatique ou cycloaliphatique, dont les groupes fonctionnels sont hydroxyle ou carboxyle, ou hydroxyle et carboxyle,
c) un diol aliphatique, cycloaliphatique ou aromatique, un polyétherdiol ou un polycarbonatediol,
d) un composé polyfonctionnels (fonctionnalité >2), dont les groupes fonctionnels sont hydroxyle ou carboxyle, ou hydroxyle et carboxyle, et
e) un acide monocarboxylique

et dont les constituants cationiques sont des atomes d'hydrogène ou des cations métalliques ;
ou un composé de formule (11)

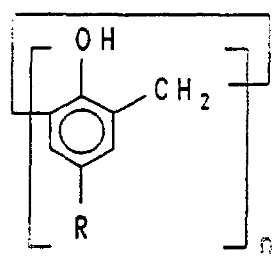

(11)

où

R représente un atome d'hydrogène, un atome d'halogène, de préférence de chlore, des groupes alkyle linéaire ou ramifié ayant 1 à 12 atomes de carbone, aralkyle, de préférence benzyle ou phénéthyle, $-NO_2$, $-NH_2$ ou $-NHR^{111}$, $R^{111}$ représente un groupe alkyle ayant 1 à 8 atomes de carbone, phényle non substitué ou substitué par un substituant alkyle en $C_1$-$C_4$ ou $-Si(CH_3)$ ;

ou un composé de formule (16)

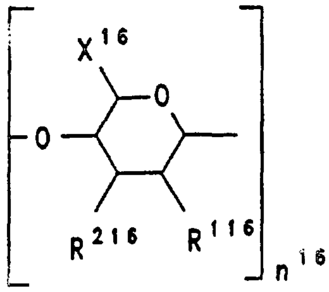

(16)

où $n^{16}$ est un nombre compris entre 3 et 100, $R^{116}$ et $R^{216}$ représentent des groupes OH, $OR^{316}$, où $R^{316}$ représente des groupes substitués ou non susbtitués alkyle en $C_1$-$C_{18}$, aryle en $C_6$-$C_{12}$ ou tosyle, et $X^{16}$ représente des groupes $CH_2OH$ ou $CH_2COR^{316}$.

**12.** Procédé pour la préparation d'une poudre ou d'un vernis en poudre selon la revendication 10 ou 11, caractérisé en ce que le pigment azoïque et l'agent de contrôle de charge sont incorporés dans la résine de façon homogène.